(19)

Europäisches
Patentamt
European
Patent Office
Office européen
des brevets

(11) **EP 3 890 288 A1**

(12) **EUROPEAN PATENT APPLICATION**
published in accordance with Art. 153(4) EPC

(43) Date of publication:
**06.10.2021 Bulletin 2021/40**

(21) Application number: **19890338.7**

(22) Date of filing: **18.11.2019**

(51) Int Cl.:
*H04M 1/58* (2006.01)    *H04R 3/02* (2006.01)
*G10L 13/00* (2006.01)   *G06F 3/16* (2006.01)
*G10L 15/00* (2013.01)

(86) International application number:
**PCT/JP2019/045118**

(87) International publication number:
**WO 2020/110808 (04.06.2020 Gazette 2020/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.11.2018 JP 2018225215**

(71) Applicant: **Panasonic Intellectual Property Management Co., Ltd.**
**Osaka-shi, Osaka 540-6207 (JP)**

(72) Inventors:
• **SUZUKI, Ryoji**
  **Osaka-shi, Osaka 530-0041 (JP)**
• **INAGAKI, Hiroki**
  **Osaka-shi, Osaka 540-6207 (JP)**

(74) Representative: **Vigand, Philippe et al**
**Novagraaf International SA**
**Chemin de l'Echo 3**
**1213 Onex - Genève (CH)**

(54) **TRANSLATION DEVICE AND TRANSLATION METHOD**

(57)    Translation device (20) includes first microphone (21), first voice recognition circuit (31), first translation circuit (33), first voice synthesis circuit (35), first loudspeaker (22), second microphone (23), second voice recognition circuit (32), second translation circuit (34), second voice synthesis circuit (36), second loudspeaker (24), first echo canceller (40), second echo canceller (50), and control circuit (37). Control circuit (37) causes first echo canceller (40) to update a first transfer function used to estimate a first echo signal during a period in which a first translated voice is being output, and causes second echo canceller (50) to update a second transfer function used to estimate a second echo signal during a period in which a second translated voice is being output.

FIG. 2

EP 3 890 288 A1

## Description

[Technical Field]

The present disclosure relates to a translation device and a translation method for, in a conversation between a first speaker and a second speaker, translating the language of one speaker into the language of the other speaker and outputting a synthesized voice after amplifying the sound level of the synthesized voice.

[Background Art]

Patent Literature (PTL) 1 discloses a conversation assisting device useful for assisting two-way conversations between two speakers by amplifying the sound levels of voices while removing acoustic noise. The conversation assisting device includes echo/crosstalk cancellers that remove interfering signals indicating echo and crosstalk from output signals of microphones. This conversation assisting device is capable of assisting two-way conversations between two speakers by amplifying the sound levels of voices while removing acoustic noise including echo and crosstalk.

[Citation List]

[Patent Literature]

[PTL 1] Japanese Patent No. 6311136

[Summary of Invention]

[Technical Problem]

The present disclosure provides a translation device and a translation method for assisting conversations between two or more speakers while stably recognizing voices by suppressing acoustic noise including echo, even in the case where voices of a plurality of speakers and a plurality of synthesized voices are present simultaneously overlapping one another, the synthesized voices being output as a result of recognizing and translating the voice of each speaker into a language on the other end and synthesizing resultant voices.

[Solution to Problem]

A translation device according to the present disclosure is a translation device which, in a conversation between a first speaker and a second speaker, translates a language of one speaker into a language of the other speaker and outputs a synthesized voice after amplifying a sound level of the synthesized voice. The translation device includes a first microphone that receives input of a first voice of the first speaker, a first voice recognition circuit that recognizes the first voice to output a first character string, a first translation circuit that translates the first character string output from the first voice recognition circuit into a language of the second speaker to output a third character string, first voice synthesis circuit that converts the third character string output from the first translation circuit into a first translated voice, a first loudspeaker that amplifies a sound level of the first translated voice, a second microphone that receives input of a second voice of the second speaker, a second voice recognition circuit that recognizes the second voice to output a second character string, a second translation circuit that translates the second character string output from the second voice recognition circuit into a language of the first speaker to output a fourth character string, a second voice synthesis circuit that converts the fourth character string output from the second translation circuit into a second translated voice, a second loudspeaker that amplifies a sound level of the second translated voice, a first echo canceller that, when first echo refers to a phenomenon in which the first translated voice whose sound level has been amplified by the first loudspeaker enters into the second microphone, estimates a first echo signal indicating the first echo from the first translated voice and a first transfer function corresponding to the first echo, and removes the first echo signal from an output signal of the second microphone, a second echo canceller that, when second echo refers to a phenomenon in which the second translated voice whose sound level has been amplified by the second loudspeaker enters into the first microphone, estimates a second echo signal indicating the second echo from the second translated voice and a second transfer function corresponding to the second echo, and removes the second echo signal from an output signal of the first microphone, and a control circuit. The control circuit causes the first echo canceller to update the first transfer function used to estimate the first echo signal during a period in which the first voice synthesis circuit is outputting the first translated voice, and the second echo canceller to update the second transfer function used to estimate the second echo signal during a period in which the second voice synthesis circuit is outputting the second translated voice.

Another translation device according to the present disclosure is a translation device which, in a conversation between a first speaker and a second speaker, translates a language of one speaker into a language of the other speaker and outputs a synthesized voice after amplifying a sound level of the synthesized voice. The translation device includes a first microphone that receives input of a first voice of the first speaker, a first voice recognition circuit that recognizes the first voice to output a first character string, a first translation circuit that translates the first character string output from the first voice recognition circuit into a language of the second speaker to output a third character string, a first voice synthesis circuit that converts the third character string output from the first translation circuit into a first translated voice, a first loudspeaker that amplifies a sound level of the first translated voice, a second microphone that receives input of a second voice of the second speaker, a second voice recognition circuit that recognizes the second voice to output a second character string, a second translation circuit that translates the second character string output from the second voice recognition circuit into a language of the first speaker to output a fourth character string, a second voice synthesis circuit that converts the fourth character string output from the second translation circuit into a second translated voice, a second loudspeaker that amplifies a sound level of the second translated voice, a third echo canceller that, when third echo refers to a phenomenon in which the first translated voice whose sound level has been amplified by the first loudspeaker enters into the first microphone, estimates a third echo signal indicating the third echo from the first translated voice and a third transfer function corresponding to the third echo, and removes the third echo signal from an output signal of the first microphone, a fourth echo canceller that, when fourth echo refers to a phenomenon in which the second translated voice whose sound level has been amplified by the second loudspeaker enters into the second microphone, estimates a fourth echo signal indicating the fourth echo from the second translated voice and a fourth transfer function corresponding to the fourth echo, and removes the fourth echo signal from an output signal of the second microphone, and a control circuit. The control circuit causes the third echo canceller to update the third transfer function used to estimate the third echo signal during a period in which the first voice synthesis circuit is outputting the first translated voice, and the fourth echo canceller to update the fourth transfer function used to estimate the fourth echo signal during a period in which the second voice synthesis circuit is outputting the second translated voice.

Another translation device according to the present disclosure is a translation device which, in a conversation between a first speaker and a second speaker, translates a language of one speaker into a language of the other speaker and outputs a synthesized voice after amplifying a sound level of the synthesized voice. The translation device includes a first microphone that receives input of a first voice of the first speaker, a first voice recognition circuit that recognizes the first voice to output a first character string, a first translation circuit that translates the first character string output from the first voice recognition circuit into a language of the second speaker to output a third character string, a first voice synthesis circuit that converts the third character string output from the first translation circuit into a first translated voice, a second microphone that receives input of a second voice of the second speaker, a second voice recognition circuit that recognizes the second voice to output a second character string, a second translation circuit that translates the second character string output from the second voice recognition circuit into a language of the first speaker to output a fourth character string, a second voice synthesis circuit that converts the fourth character string output from the second translation circuit into a second translated voice, a summing circuit that sums the first translated voice output from the first voice synthesis circuit and the second translated voice output from the second voice synthesis circuit to output a sum translated voice, a loudspeaker that amplifies a sound level of the sum translated voice output from the summing circuit, a fifth echo canceller that, when fifth echo refers to a phenomenon in which the sum translated voice whose sound level has been amplified by the loudspeaker enters into the second microphone, emirates a fifth echo signal indicating the fifth echo from the sum translated voice and a fifth transfer function corresponding to the fifth echo, and removes the fifth echo signal from an output signal of the second microphone, a sixth echo canceller that, when sixth echo refers to a phenomenon in which the sum translated voice whose sound level has been amplified by the loudspeaker enters into the first microphone, estimates a sixth echo signal indicating the sixth echo from the sum translated voice and a sixth transfer function corresponding to the sixth echo, and removes the sixth echo signal from an output signal of the first microphone, and a control circuit. The control circuit causes the fifth echo canceller to update the fifth transfer function used to emirate the fifth echo signal during a period in which the first voice synthesis circuit is outputting the first translated voice or the second voice synthesis circuit is outputting the second translated voice, and the sixth echo canceller to update the sixth transfer function used to estimate the sixth echo signal during a period in which the first voice synthesis circuit is outputting the first translated voice or the second voice synthesis circuit is outputting the second translated voice.

A translation method according to the present disclosure is a translation method for, in a conversation between a first speaker and a second speaker, translating a language of one speaker into a language of the other speaker and outputting a synthesized voice after amplifying a sound level of the synthesized voice. The translation method includes receiving input of a first voice of the first speaker, recognizing the first voice to output a first character string, translating the first character string output in the recognizing of the first voice into a language of the second speaker to output a third character string, converting the third character string output in the translating of the first character string into a first translated voice, amplifying a sound level of the first translated voice, receiving input of a second voice of the second speaker, recognizing the second voice to output a second character string, translating the second character string output in the recognizing of the second voice into a language of the first speaker to output a fourth character string, converting the fourth character string output in the translating of the second character string into a second translated voice, amplifying a sound level of the second translated voice, when first echo refers to a phenomenon in which the first translated voice whose sound level has been amplified in the amplifying of the sound level of the first translated voice is received in the receiving of input of the second voice, estimating a first echo signal indicating the first echo from the first translated voice and a first transfer function corresponding to the first echo, and removing the first echo signal from an output signal output in the receiving of input of the second voice, when second echo refers to a phenomenon in which the second translated voice whose sound level has been amplified in the amplifying of the sound level of the second translated voice is received in the receiving of input of the first voice, estimating a second echo signal indicating the second echo from the second translated voice and a second transfer function corresponding to the second echo, and removing the second echo signal from an output signal output in the receiving of input of the first voice, and giving an instruction to update the first transfer function used to estimate the first echo signal in the estimating of the first echo signal during a period in which the first translated voice is being output in the converting of the third character string, and to update the second transfer function used to estimate the second echo signal in the estimating of the second echo signal during a period in which the second translated voice is being output in the converting of the fourth character string.

Another translation method according to the present disclosure is a translation method for, in a conversation between a first speaker and a second speaker, translating a language of one speaker into a language of the other speaker and outputting a synthesized voice after amplifying a sound level of the synthesized voice. The translation method includes receiving input of a first voice of the first speaker, recognizing the first voice to output a first character string, translating the first character string output in the recognizing of the first voice into a language of the second speaker to output a third character string, converting the third character string output in the translating of the first character string into a first translated voice;

amplifying a sound level of the first translated voice, receiving input of a second voice of the second speaker, recognizing the second voice to output a second character string, translating the second character string output in the recognizing of the second voice into a language of the first speaker to output a fourth character string, converting the fourth character string output in the translating of the second character string into a second translated voice, amplifying a sound level of the second translated voice, when third echo refers to a phenomenon in which the first translated voice whose sound level has been amplified in the amplifying of the sound level of the first translated voice is received in the receiving of input of the first voice, estimating a third echo signal indicating the third echo from the first translated voice and a third transfer function corresponding to the third echo, and removing the third echo signal from an output signal output in the receiving of input of the first voice, when fourth echo refers to a phenomenon in which the second translated voice whose sound level has been amplified in the amplifying of the sound level of the second translated voice is received in the receiving of input of the second voice, estimating a fourth echo signal indicating the fourth echo from the second translated voice and a fourth transfer function corresponding to the fourth echo, and removing the fourth echo signal from an output signal output in the receiving of input of the second voice, and giving an instruction to update the third transfer function used to estimate the third echo signal in the estimating of the third echo signal during a period in which the first translated voice is being output in the converting of the third character string, and to update the fourth transfer function used to estimate the fourth echo signal in the estimating of the fourth echo signal during a period in which the second translated voice is being output in the converting of the fourth character string.

[Advantageous Effects of Invention]

The translation device and the translation method according to the present disclosure are useful for assisting conversations between two or more speakers while stably recognizing voices by removing acoustic noise including echo, even in the case where voices of a plurality of speakers and a plurality of synthesized voices are present simultaneously overlapping one another, the synthesized voices being output as a result of recognizing and translating the voice of each speaker into a language on the other end and synthesizing resultant voices.

[Brief Description of Drawings]

[FIG. 1]

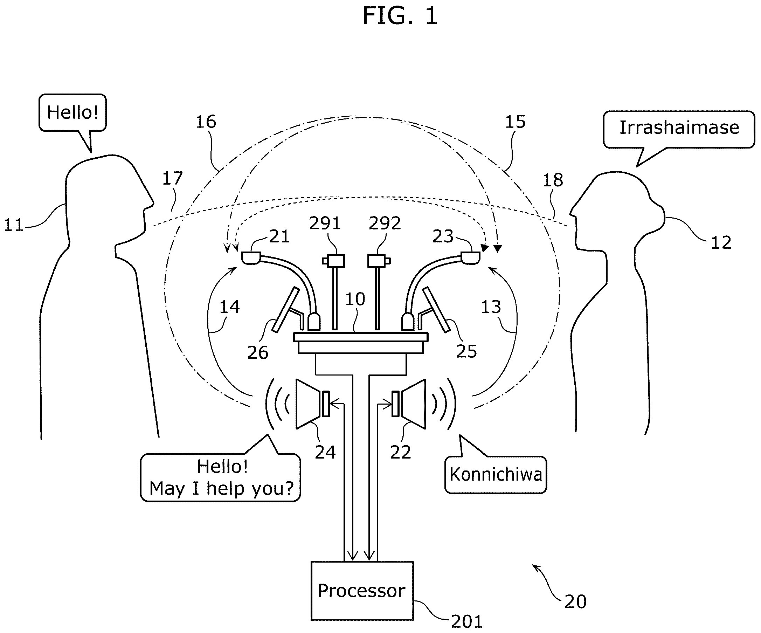

FIG. 1 is a diagram illustrating an example of application of a translation device according to Embodiment 1.
[FIG. 2]

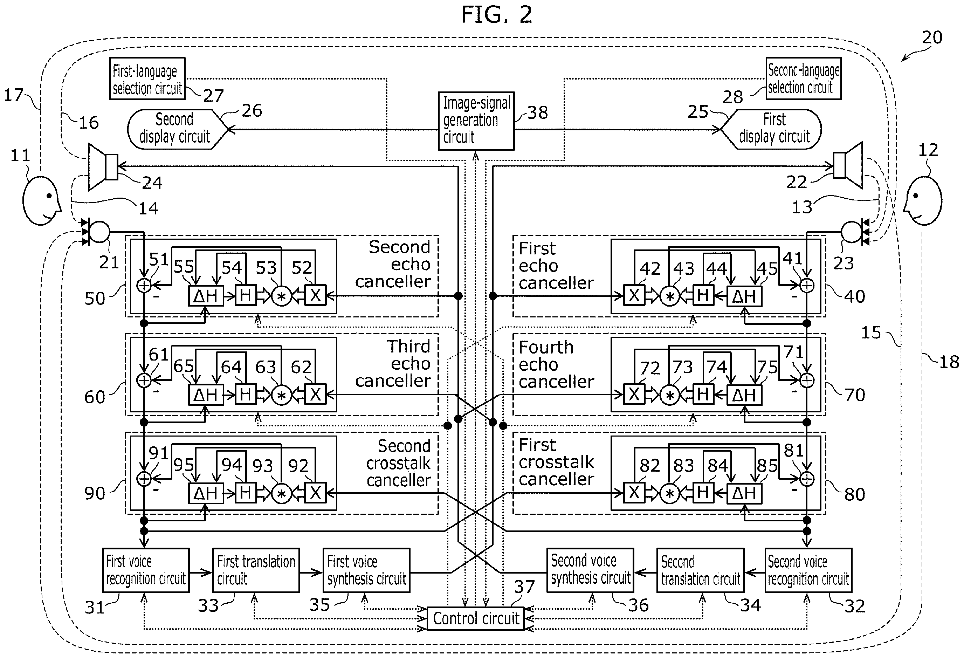

FIG. 2 is a block diagram illustrating a configuration of the translation device according to Embodiment 1.
[FIG. 3]

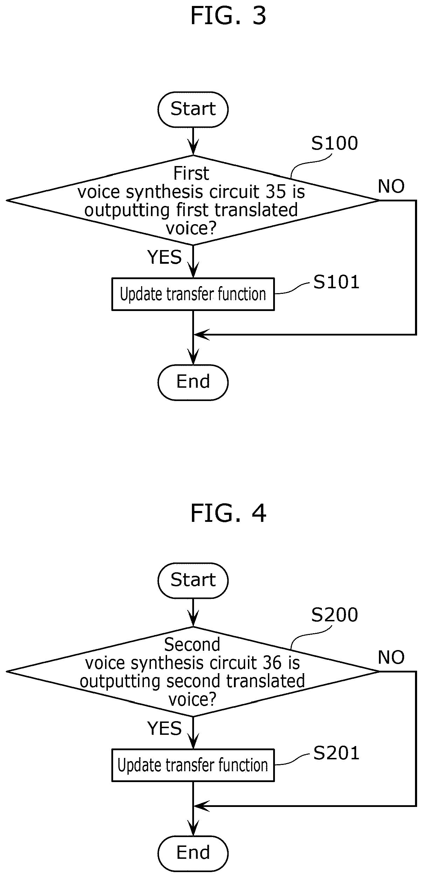

FIG. 3 is a flowchart for updating transfer functions of first and third echo cancellers.

[FIG. 4]

FIG. 4 is a flowchart for updating transfer functions of second and fourth echo cancellers.

[FIG. 5]

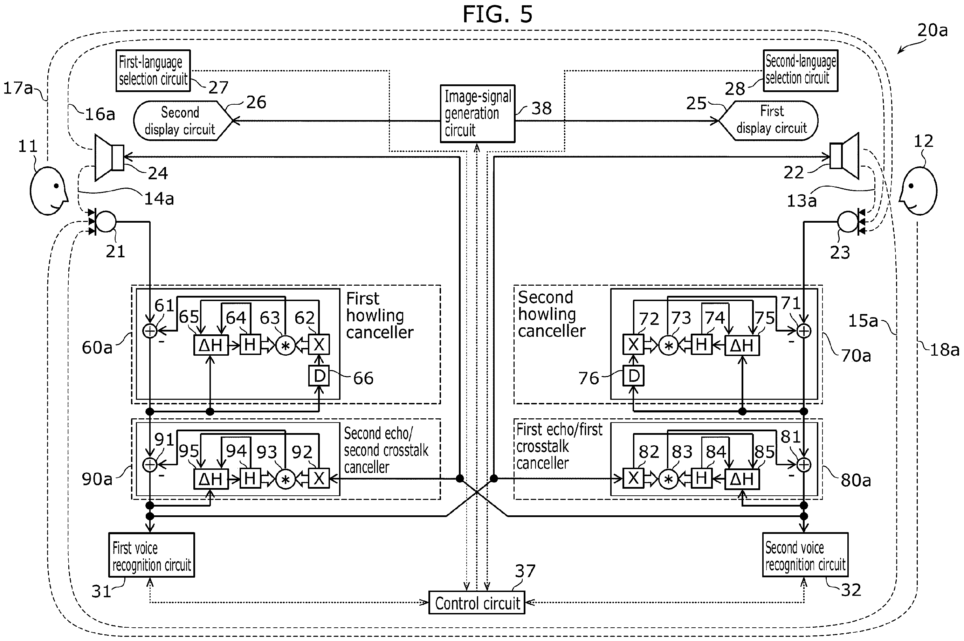

FIG. 5 is a block diagram illustrating a configuration of a translation device according to Embodiment 2.

[FIG. 6]

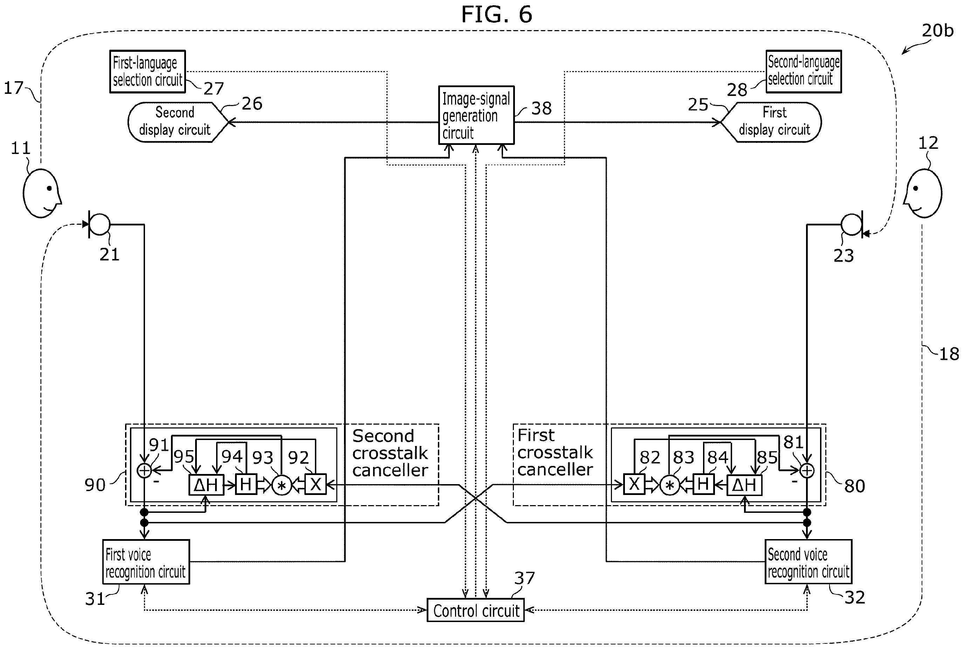

FIG. 6 is a block diagram illustrating a configuration of a translation device according to Embodiment 3.

[FIG. 7]

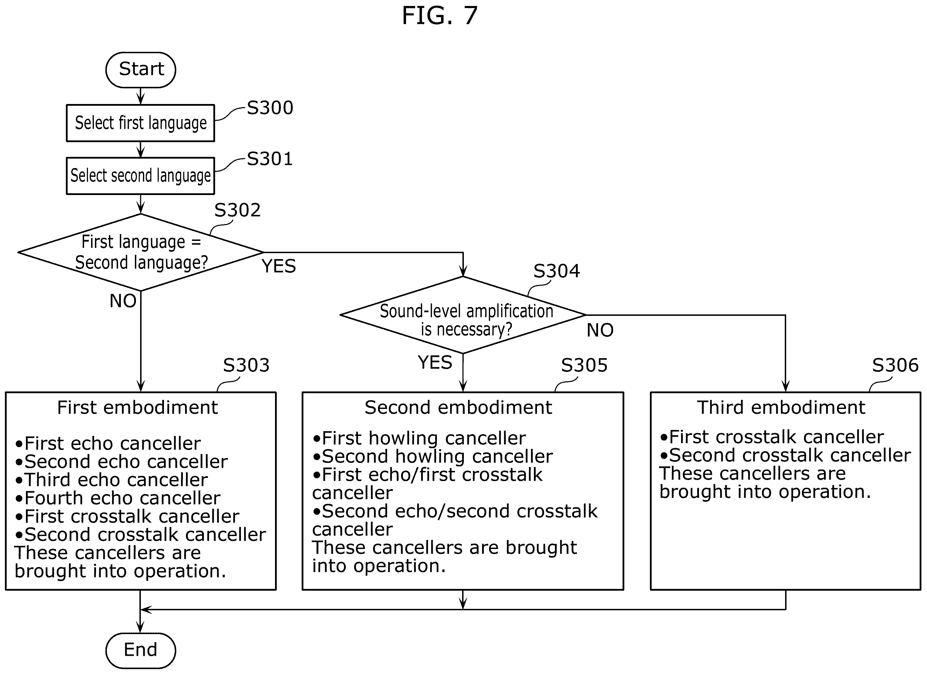

FIG. 7 is a flowchart for selecting an optimum configuration from Embodiments 1 to 3.

[FIG. 8]

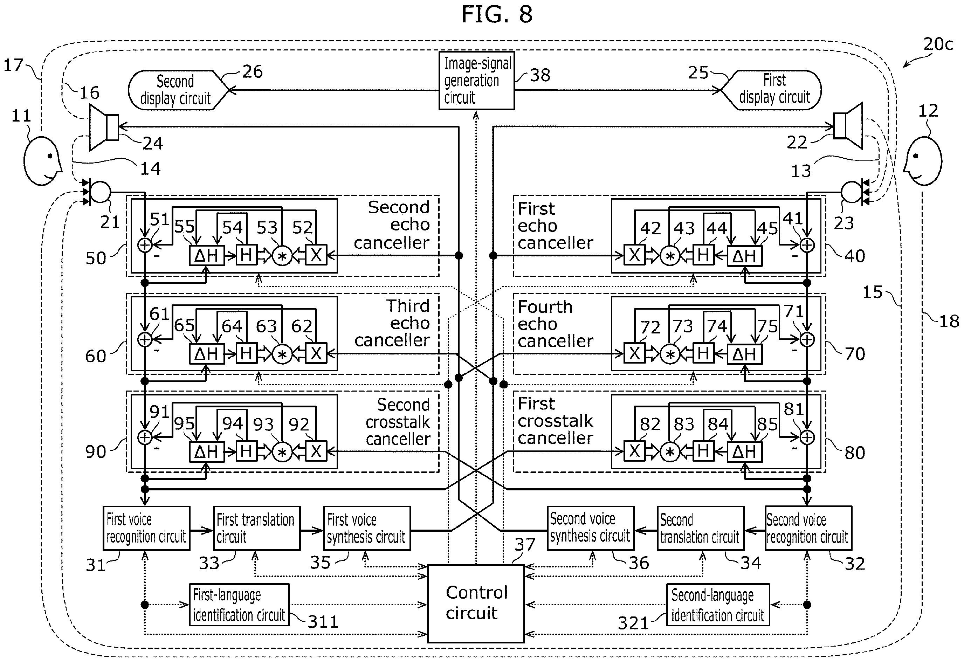

FIG. 8 is a block diagram illustrating a configuration of a translation device according to Embodiment 4.

[FIG. 9]

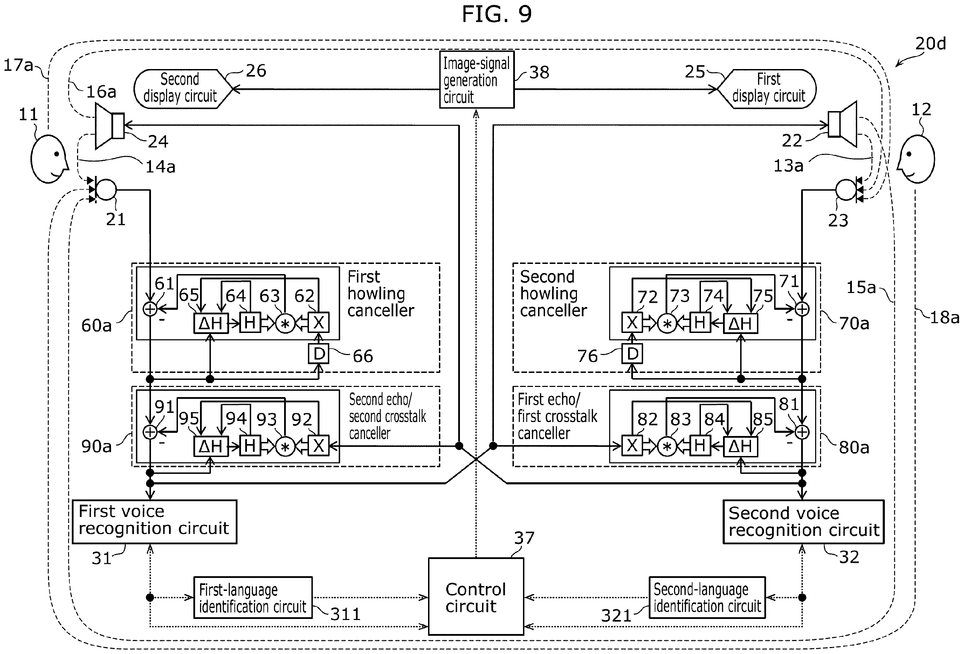

FIG. 9 is a block diagram illustrating a configuration of a translation device according to Embodiment 5.

[FIG. 10]

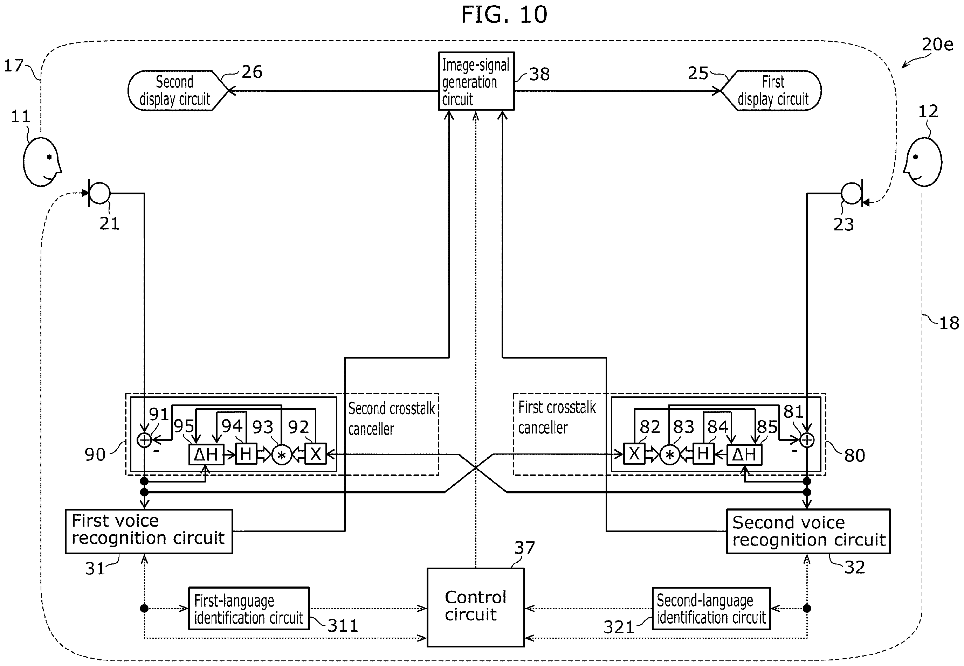

FIG. 10 is a block diagram illustrating a configuration of a translation device according to Embodiment 6.

[FIG. 11]

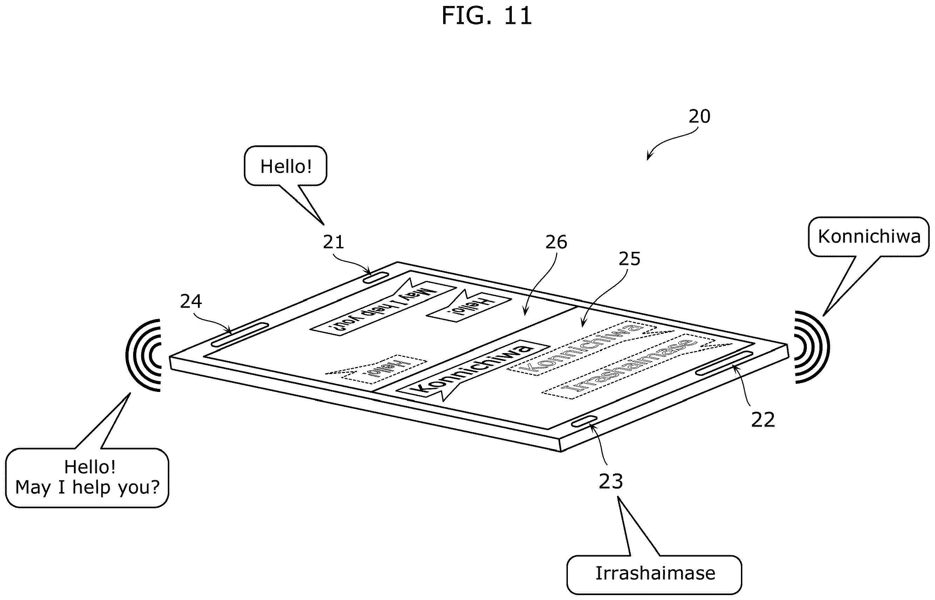

FIG. 11 is a diagram showing an example of conditions of use of a translation device.

[Description of Embodiments]

Hereinafter, detailed description of embodiments will be given with reference to the drawings as appropriate. However, detailed description more than necessary may be omitted. For example, detailed description of well-known matter and redundant description of substantially identical constituent elements may be omitted. This is to avoid unnecessary redundancy of the following description and to facilitate understanding for persons skilled in the art.

Note that the accompanying drawings and the following description are provided to help persons skilled in the art to better understand the present disclosure, and do not intend to limit the subject matter of claims by these drawings and the description.

[Embodiment 1]

Embodiment 1 will be described hereinafter with reference to FIGS. 1 and 2.

[1-1. Example of Application]

FIG. 1 is a diagram illustrating an example of application of translation device 20 according to Embodiment 1. Here, an example of application is illustrated in which translation device 20 is applied as a device for translating conversations between first speaker 11 and second speaker 12 who face each other across counter 10 and outputting translated conversations after amplifying the sound levels of the conversations.

Translation device 20 is a device for translating conversations between first speaker 11 (here, a customer) and second speaker 12 (here, a receptionist) and outputting translated conversations after amplifying the sound levels of the conversations. Counter 10 includes first microphone 21 for receiving input of a voice (first voice) of first speaker 11, and first loudspeaker 22 provided on the side of second speaker 12 and for translating and outputting the voice of the first speaker via translation device 20. Counter 10 also includes second microphone 23 provided on the side of second speaker 12 and for receiving input of a voice (second voice) of second speaker 12, and second loudspeaker 24 provided on the side of first speaker 11 and for translating and outputting the voice of the second speaker via translation device 20. Translation device 20 further includes first display circuit 25, second display circuit 26, first camera 291, and second camera 292.

For example, when first speaker 11 speaks "Hello" into first microphone 21, the voice of the first speaker is translated by translation device 20, and the translated voice is output as "Konnichiwa" from first loudspeaker 22 after the sound level of the translated voice is amplified. Then, when second speaker 12 speaks "Irrasshaimase" into second microphone 23 in response, the voice of the second speaker is translated by translation device 20, and the translated voice is output as "Hello! May I help you?" from second loudspeaker 24 after the sound level of the translated voice is amplified. First display circuit 25 and second display circuit 26 display character strings, such as " Hello", "Hello! May I help you?", "Konnnichiwa", and "Irrasshaimase", that correspond to the speaking of first speaker 11 and second speaker 12.

By using translation device 20, first and second speakers 11 and 12 are able to enjoy conversations even in a narrow space because the translation device achieves accurate voice recognition by removing acoustic noise including echo (reverberation) and crosstalk (overhearing).

The echo refers to the following two phenomena: a phenomenon in which a voice output from a loudspeaker toward one speaker circles around and enters into a microphone for receiving input of the speaker's voice and a phenomenon in which a voice output from a loudspeaker toward one speaker circles around and enters into a microphone for receiving input of voices of other speakers. Specifically, a phenomenon in which a voice output from first loudspeaker 22 circles around and enters into second microphone 23 is herein defined as first echo 13, and a phenomenon in which a voice output from second loudspeaker 24 circles around and enters into first microphone 21 is defined as second echo 14. Moreover, a phenomenon in which a voice output from first loudspeaker 22 circles around and enters into first microphone 21 is defined as third echo 15, and a phenomenon in which a voice output from second loudspeaker 24 circles around and enters second microphone 23 is defined as fourth echo 16.

The crosstalk refers to a phenomenon in which the voice of one speaker enters into a microphone for receiving input of voices of other speakers. Specifically, a phenomenon in which the voice of first speaker 11 enters into second microphone 23 is herein defined as first crosstalk 17, and a phenomenon in which the voice of second speaker 12 enters into first microphone 21 is defined as second crosstalk 18.

[1-2. Configuration]

FIG. 2 is a block diagram illustrating a configuration of translation device 20 according to Embodiment 1 illustrated in FIG. 1. Translation device 20 includes first microphone 21, first loudspeaker 22, second microphone 23, second loudspeaker 24, first display circuit 25, second display circuit 26, first language selection circuit 27, second language selection circuit 28, first echo canceller 40, second echo canceller 50, third echo canceller 60, fourth echo canceller 70, first crosstalk canceller 80, second crosstalk canceller 90, first voice recognition circuit 31, second voice recognition circuit 32, first translation circuit 33, second translation circuit 34, first voice synthesis circuit 35, second voice synthesis circuit 36, control circuit 37, and image-signal generation circuit 38. Although not illustrated, translation device 20 may also include a central processing unit (CPU), a read-only memory (ROM), and a random access memory (RAM) that are connected mutually via buses. Processor 201 illustrated in FIG. 1 includes first echo canceller 40, second echo canceller 50, third echo canceller 60, fourth echo canceller 70, first crosstalk canceller 80, second crosstalk canceller 90, first voice recognition circuit 31, second voice recognition circuit 32, first translation circuit 33, second translation circuit 34, first voice synthesis circuit 35, second voice synthesis circuit 36, control circuit 37, and image-signal generation circuit 38. Note that constituent elements of translation device 20 each have wired or wireless connections to one another.

First microphone 21 is a microphone for receiving input of a first voice of first speaker 11 and provided, for example, on the customer side of counter 10 (here, on the side of first speaker 11) as illustrated in FIG. 1. An output signal to be output from first microphone 21 is, for example, digital voice data generated by an A/D converter built in or provided immediately downstream of first microphone 21. First microphone 21 may also have directivity. Directivity as used herein refers to the function of being capable of picking up sounds entering from a specific direction.

First loudspeaker 22 amplifies the sound level of a first translated voice. Although described in detail later in [1-3. Operations], the first translated voice refers to a voice obtained by translating the first voice or language of first speaker 11 into the language of second speaker 12 via translation device 20. First loudspeaker 22 is provided, for example, on the receptionist side of counter 10 (here, on the side of second speaker 12) as illustrated in FIG. 1. For example, first loudspeaker 22 converts input digital voice data into an analog signal via a D/A converter built in or provided immediately upstream of first loudspeaker 22 and then outputs the analog signal as a voice.

Second microphone 23 is a microphone for receiving input of a second voice of second speaker 12 and provided, for example, on the receptionist side of counter 10 (here, on the side of second speaker 12) as illustrated in FIG. 1. An output signal to be output from second microphone 23 is, for example, digital voice data generated by an A/D converter built in or provided immediately downstream of second microphone 23. Second microphone 23 may also have directivity. Directivity as used herein refers to the function of being capable of picking up sounds entering from a specific direction.

Second loudspeaker 24 amplifies the sound level of a second translated voice. Although described in detail later in [1-3. Operations], the second translated voice refers to a voice obtained by translating the second voice or language of second speaker 12 into the language of first speaker 11 via translation device 20. Second loudspeaker 24 is provided, for example, on the customer side of counter 10 (here, on the side of first speaker 11) as illustrated in FIG. 1. For example, second loudspeaker 24 converts input digital voice data into an analog signal via a D/A converter built in or provided immediately upstream of second loudspeaker 24 and then outputs the analog signal as a voice.

First display circuit 25 is a display circuit that displays character strings obtained as a result of recognizing and translating the voice of first speaker 11 and character strings obtained as a result of recognizing the voice of second speaker 12, and is provided at a location that can be recognized by second speaker 12. For example, first display circuit 25 may be a liquid crystal display or an organic electroluminescence (EL) display, or may be other devices such as a tablet terminal, a smartphone, or a personal computer. First display circuit 25 may also have a touch panel function.

Second display circuit 26 is a display circuit that displays character strings obtained as a result of recognizing and translating the voice of second speaker 12 and character strings obtained as a result of recognizing the voice of first speaker 11, and is provided at a location that can be recognized by first speaker 11. For example, second display circuit 26 may be a liquid crystal display or an organic EL display, or may be other devices such as a tablet terminal, a smartphone, or a personal computer. Second display circuit 26 may also have a touch panel function.

First language selection circuit 27 receives a selection of a first language used by first speaker 11 from first speaker 11 and notifies control circuit 37 of the selection. For example, first language selection circuit 27 may be a switch that sets the first language as the type of the language of the voice of first speaker 11, and is arranged at a location that can be selected by first speaker 11. When first display circuit 25 has a touch panel function, first language selection circuit 27 may be included in first display circuit 25.

Second language selection circuit 28 receives a selection of a second language used by second speaker 12 from second speaker 12 and notifies control circuit 37 of the selection. For example, second language selection circuit 28 is a switch that sets the second language as the type of the language of the voice of second speaker 12, and is arranged at a location that can be selected by second speaker 12. When second display circuit 26 has a touch panel function, second language selection circuit 28 may be included in second display circuit 26.

The CPU is a processor that executes programs stored in the ROM. The ROM stores, for example, programs to be read and executed by the CPU. The CPU implements processing of circuits described later by executing such programs. The RAM is a readable and writable memory having, for example, a storage area used by the CPU when executing programs.

Processing of circuits described below (first voice recognition circuit 31, second voice recognition circuit 32, first translation circuit 33, second translation circuit 34, first voice synthesis circuit 35, second voice synthesis circuit 36, control circuit 37, and image-signal generation circuit 38) is implemented by the processor.

First voice recognition circuit 31 recognizes the first voice of first speaker 11 to output a first character string. First voice recognition circuit 31 also outputs the first character string to first translation circuit 33 and control circuit 37 as a result of recognizing the first voice of first speaker 11.

Second voice recognition circuit 32 recognizes the second voice of second speaker 12 to output a second character string. Second voice recognition circuit 32 also outputs the second character string to second translation circuit 34 and control circuit 37 as a result of recognizing the second voice of second speaker 12.

First translation circuit 33 translates the first character string output from first voice recognition circuit 31 into the language of second speaker 12 to output a third character string. First translation circuit 33 also outputs the third character string to first voice synthesis circuit 35 and control circuit 37.

Second translation circuit 34 translates the second character string output from second voice recognition circuit 32 into the language of first speaker 11 to output a fourth character string. Second translation circuit 34 also outputs the fourth character string to second voice synthesis circuit 36 and control circuit 37.

First voice synthesis circuit 35 converts the third character string output from first translation circuit 33 into a first translated voice. First voice synthesis circuit 35 also outputs the first translated voice to first loudspeaker 22, first echo canceller 40, and third echo canceller 60.

Second voice synthesis circuit 36 converts the fourth character string output from second translation circuit 34 into a second translated voice. Second voice synthesis circuit 36 also outputs the second translated voice to second loudspeaker 24, second echo canceller 50, and fourth echo canceller 70.

Control circuit 37 causes first echo canceller 40 to update a first transfer function used to estimate a first echo signal during a period in which first voice synthesis circuit 35 is outputting the first translated voice, and causes second echo canceller 50 to update a second transfer function used to estimate a second echo signal during a period in which second voice synthesis circuit 36 is outputting the second translated voice. Although described in detail later, the first transfer function is stored in first transfer-function memory circuit 44 included in first echo canceller 40. Similarly, the second transfer function is stored in second transfer-function memory circuit 54 included in second echo canceller 50.

Control circuit 37 also causes third echo canceller 60 to update a third transfer function used to estimate a third echo signal during a period in which first voice synthesis circuit 35 is outputting the first translated voice, and causes fourth echo canceller 70 to update a fourth transfer function used to estimate a fourth echo signal during a period in which second voice synthesis circuit 36 is outputting the second translated voice. Although described in detail later, the third transfer function is stored in third transfer-function memory circuit 64 included in third echo canceller 60. Similarly, the fourth transfer function is stored in fourth transfer-function memory circuit 74 included in fourth echo canceller 70.

That is, control circuit 37 does not cause first and third echo cancellers 40 and 60 to update the first and third transfer function during a period in which first voice synthesis circuit 35 is not outputting the first translated voice. Control circuit 37 also does not cause second and fourth echo cancellers 50 and 70 to update the second and fourth transfer functions during a period in which second voice synthesis circuit 36 is not outputting the second translated voice.

On the basis of the first language notified from first language selection circuit 27 and the second language notified from second language selection circuit 28, control circuit 37 further causes first voice recognition circuit 31 to recognize voices in the first language, causes second voice recognition circuit 32 to recognize voices in the second language, causes first translation circuit 33 to translate the first language into the second language, causes second translation circuit 34 to translate the second language into the first language, causes first voice synthesis circuit 35 to synthesize voices in the second language, and causes second voice synthesis circuit 36 to synthesize voices in the first language.

Image-signal generation circuit 38 receives input of character strings from control circuit 37, the character strings including the first character string in the first language output from first voice recognition circuit 31 as a result of recognizing the voice of first speaker 11, the third character string obtained by converting the voice of first speaker 11 in the first language output from first translation circuit 33 into characters in the second language, the second character string in the second language output from second voice recognition circuit 32 as a result of recognizing the voice of second speaker 12, and the fourth character string obtained by converting the voice of second speaker 12 in the second language output from second translation circuit 34 into characters in the first language.

Image-signal generation circuit 38 further outputs, to second display circuit 26, the first character string in the first language output from first voice recognition circuit 31 as a result of recognizing the voice of first speaker 11, and the fourth character string obtained by converting the voice of second speaker 12 in the second language output from second translation circuit 34 into the first language. Image-signal generation circuit 38 also outputs, to first display circuit 25, the second character string in the second language output from second voice recognition circuit 32 as a result of recognizing the voice of second speaker 12, and the third character string obtained by converting the voice of first speaker 11 in the first language output from first translation circuit 33 into the second language.

[1-2-1. First Echo Canceller 40]

First echo canceller 40 is a circuit that, when first echo 13 refers to a phenomenon in which the first translated voice whose sound level has been amplified by first loudspeaker 22 enters into second microphone 23, estimates the first echo signal indicating first echo 13 from the first translated voice and the first transfer function corresponding to first echo 13 and removes the first echo signal from the output signal of second microphone 23. The first echo signal as used herein refers to a signal indicating the degree of first echo 13.

In the present embodiment, first echo canceller 40 is a circuit that removes the first echo signal from the output signal of second microphone 23 and outputs the resultant signal after the removal to fourth echo canceller 70. It is also a digital signal processing circuit that processes digital voice data in a time-base domain.

More specifically, first echo canceller 40 includes first transfer-function memory circuit 44, first memory circuit 42, first convolution arithmetic unit 43, first subtractor 41, and first transfer-function updating circuit 45.

First transfer-function memory circuit 44 stores the first transfer function corresponding to first echo 13.

First memory circuit 42 stores an output signal of first voice synthesis circuit 35.

First convolution arithmetic unit 43 generates a first interfering signal (i.e., first echo signal) by convolution of signals stored in first memory circuit 42 and first transfer functions stored in first transfer-function memory circuit 44. For example, first convolution arithmetic unit 43 is an N-tap finite impulse response (FIR) filter that performs a convolution operation given by Expression 1 below.

[Expression 1]

$$y1'_t = \sum_{i=0}^{N-1} \{H1(i)_t \times x1(t-i)\}$$

Here, $y1'_t$ is the first interfering signal at time t, N is the number of taps in the FIR filter, $H1(i)_t$ is the i-th first transfer function among N first transfer functions stored in first transfer-function memory circuit 44 at time t, and $x1(t-i)$ is the $(t-i)$-th signal among signals stored in first memory circuit 42.

First subtractor 41 removes the first interfering signal output from first convolution arithmetic unit 43 from the output signal of second microphone 23 and outputs a resultant signal as an output signal of first echo canceller 40. For example, first subtractor 41 performs a subtraction given by Expression 2 below.

[Expression 2]

$$e1_t = y1_t - y1'_t$$

Here, $e1_t$ is the output signal of first subtractor 41 at time t, and $y1_t$ is the output signal of second microphone 23 at time t.

First transfer-function updating circuit 45 updates a first transfer function stored in first transfer-function memory circuit 44 on the basis of the output signal of first subtractor 41 and a signal stored in first memory circuit 42. For example, first transfer-function updating circuit 45 updates a first transfer function stored in first transfer-function memory circuit 44 through independent component analysis based on the output signal of first subtractor 41 and a signal stored in first memory circuit 42, as given by Expression 3 below, so that the output signal of first subtractor 41 and the signal stored in first memory circuit 42 become independent of each other.

## [Expression 3]

$$H1(j)_{t+1} = H1(j)_t + \alpha 1 \times \varphi 1(e1_t) \times x1(t-j)$$

Here, $H1(j)_{t+1}$ is the j-th first transfer function among the N first transfer functions stored in first transfer-function memory circuit 44 at time t + 1 (i.e., after the update), $H1(j)_t$ is the j-th first transfer function among the N first transfer functions stored in first transfer-function memory circuit 44 at time t (i.e., before the update). Also, $\alpha 1$ is a first step-size parameter for controlling the learning speed for estimating the first transfer function corresponding to first echo 13, and $\varphi 1$ is a nonlinear function (e.g., a sigmoid function, a hyperbolic tangent function (tanh function), a normalized linear function, or a signum function (sign function)).

In this way, first transfer-function updating circuit 45 performs nonlinear processing using a nonlinear function on the output signal of first subtractor 41 and multiplies a resultant signal by the signals stored in first memory circuit 42 and the first step-size parameter for controlling the learning speed for estimating the first transfer function corresponding to first echo 13 so as to calculate a first update coefficient. Then, the calculated first update coefficient is added to the first transfer function stored in first transfer-function memory circuit 44 to update the first transfer function.

Moreover, control circuit 37 causes first echo canceller 40 to update the first transfer function used to estimate the first echo signal during a period in which first voice synthesis circuit 35 is outputting the first translated voice. That is, the first transfer function is updated according to the formula for the updating of the first transfer function, given by Expression 3 above, during a period in which first echo 13 is present.

[1-2-2. Second Echo Canceller 50]

Second echo canceller 50 is a circuit that, when second echo 14 refers to a phenomenon in which the second translated voice whose sound level has been amplified by second loudspeaker 24 enters into first microphone 21, estimates the second echo signal indicating second echo 14 from the second translated voice and the second transfer function corresponding to second echo 14 and removes the second echo signal from the output signal of first microphone 21. The second echo signal as used herein refers to a signal indicating the degree of second echo 14.

In the present embodiment, second echo canceller 50 is a circuit that removes the second echo signal from the output signal of first microphone 21 and outputs a resultant signal after the removal to third echo canceller 60. It is also a digital signal processing circuit that processes digital voice data in a time-base domain.

More specifically, second echo canceller 50 includes second transfer-function memory circuit 54, second memory circuit 52, second convolution arithmetic unit 53, second subtractor 51, and second transfer-function updating circuit 55.

Second transfer-function memory circuit 54 stores the second transfer function corresponding to second echo 14.

Second memory circuit 52 stores an output signal of second voice synthesis circuit 36.

Second convolution arithmetic unit 53 generates a second interfering signal (i.e., second echo signal) by convolution of signals stored in second memory circuit 52 and second transfer functions stored in second transfer-function memory circuit 54. For example, second convolution arithmetic unit 53 is an N-tap FIR filter that performs a convolution operation given by Expression 4 below.

## [Expression 4]

$$y2'_t = \sum_{i=0}^{N-1} \{H2(i)_t \times x2(t-i)\}$$

Here, $y2'_t$ is the second interfering signal at time t, N is the number of taps in the FIR filter, $H2(i)_t$ is the i-th second transfer function among N second transfer functions stored in second transfer-function memory circuit 54 at time t, and x2(t-i) is the (t-i)-th signal among the signals stored in second memory circuit 52.

Second subtractor 51 removes the second interfering signal output from second convolution arithmetic unit 53 from the output signal of first microphone 21 and outputs a resultant signal as an output signal of second echo canceller 50. For example, second subtractor 51 performs a subtraction given by Expression 5 below.

[Expression 5]

$$e2_t = y2_t - y2'_t$$

Here, $e2_t$ is the output signal of second subtractor 51 at time t, and $y2_t$ is the output signal of first microphone 21 at time t.

Second transfer-function updating circuit 55 updates a second transfer function stored in second transfer-function memory circuit 54 on the basis of the output signal of second subtractor 51 and a signal stored in second memory circuit 52. For example, second transfer-function updating circuit 55 updates a second transfer function stored in second transfer-function memory circuit 54 through independent component analysis based on the output signal of second subtractor 51 and a signal stored in second memory circuit 52, as given by Expression 6 below, so that the output signal of second subtractor 51 and the signal stored in second memory circuit 52 become independent of each other.

[Expression 6]

$$H2(j)_{t+1} = H2(j)_t + \alpha2 \times \varphi2(e2_t) \times x2(t - j)$$

Here, $H2(j)_{t+1}$ is the j-th second transfer function among N second transfer functions stored in second transfer-function memory circuit 54 at time t + 1 (i.e., after the update), and $H2(j)_t$ is the j-th second transfer function among the N second transfer functions stored in second transfer-function memory circuit 54 at time t (i.e., before the update). Also, a2 is a second step-size parameter for controlling the learning speed for estimating the second transfer function corresponding to second echo 14, and φ2 is a nonlinear function (e.g., a sigmoid function, a hyperbolic tangent function (tanh function), a normalized linear function, or a signum function (sign function)).

In this way, second transfer-function updating circuit 55 performs nonlinear processing using a nonlinear function on the output signal of second subtractor 51 and multiplies a resultant signal by the signals stored in second memory circuit 52 and the second step-size parameter for controlling the learning speed for estimating the second transfer function corresponding to second echo 14 so as to calculate a second update coefficient. Then, the calculated second update coefficient is added to the second transfer function stored in second transfer-function memory circuit 54 to update the second transfer function.

Moreover, control circuit 37 causes second echo canceller 50 to update the second transfer function used to estimate the second echo signal during a period in which second voice synthesis circuit 36 is outputting the second translated voice. That is, the second transfer function is updated according to the formula for the updating of the second transfer function, given by Expression 6 above, during a period in which second echo 14 is present.

[1-2-3. Third Echo Canceller 60]

Third echo canceller 60 is a circuit that, when third echo 15 refers to a phenomenon in which the first translated voice output from first loudspeaker 22 enters into first microphone 21, estimates a third echo signal indicating third echo 15 from the first translated voice and the third transfer function corresponding to third echo 15 and removes the third echo signal from the output signal of first microphone 21. The third echo signal as used herein refers to a signal indicating the degree of third echo 15.

In the present embodiment, third echo canceller 60 is a circuit that removes the third echo signal from the output signal of second echo canceller 50 and outputs a resultant signal after the removal to second crosstalk canceller 90. It is also a digital signal processing circuit that processes digital voice data.

More specifically, third echo canceller 60 includes third transfer-function memory circuit 64, third memory circuit 62, third convolution arithmetic unit 63, third subtractor 61, and third transfer-function updating circuit 65.

Third transfer-function memory circuit 64 stores the third transfer function corresponding to third echo 15.

Third memory circuit 62 stores the output signal of first voice synthesis circuit 35.

Third convolution arithmetic unit 63 generates a third interfering signal (i.e., third echo signal) by convolution of signals stored in third memory circuit 62 and third transfer functions stored in third transfer-function memory circuit 64. For example, third convolution arithmetic unit 63 is an N-tap FIR filter that performs a convolution operation given by Expression 7 below.

[Expression 7]

$$y3'_t = \sum_{i=0}^{N-1} \{H3(i)_t \times x3(t-i)\}$$

Here, y3't is the third interfering signal at time t, N is the number of taps in the FIR filter, $H3(i)_t$ is the i-th third transfer function among N third transfer functions stored in third transfer-function memory circuit 64 at time t, and x3(t-i) is the (t-i)-th signal among the signals stored in third memory circuit 62.

Third subtractor 61 removes the third interfering signal output from third convolution arithmetic unit 63 from the output signal of second echo canceller 50 and outputs a resultant signal as an output signal of third echo canceller 60. For example, third subtractor 61 performs a subtraction given by Expression 8 below.

[Expression 8]

$$e3_t = y3_t - y3'_t$$

Here, e3t is the output signal of third subtractor 61 at time t, and $y3_t$ is the output signal of second echo canceller 50 at time t.

Third transfer-function updating circuit 65 updates a third transfer function stored in third transfer-function memory circuit 64 on the basis of the output signal of third subtractor 61 and a signal stored in third memory circuit 62. For example, third transfer-function updating circuit 65 updates a third transfer function stored in third transfer-function memory circuit 64 through independent component analysis based on the output signal of third subtractor 61 and a signal stored in third memory circuit 62, as given by Expression 9 below, so that the output signal of third subtractor 61 and the signal stored in third memory circuit 62 become independent of each other.

[Expression 9]

$$H3(j)_{t+1} = H3(j)_t + \alpha3 \times \varphi3(e3_t) \times x3(t-j)$$

Here, $H3(j)_{t+1}$ is the j-th third transfer function among N third transfer functions stored in third transfer-function memory circuit 64 at time t + 1 (i.e., after the update), H3(j)t is the j-th third transfer function among the N third transfer functions stored in third transfer-function memory circuit 64 at time t (i.e., before the update), a3 is a third step-size parameter for controlling the learning speed for estimating the third transfer function corresponding to third echo 15, and φ3 is a nonlinear function (e.g., a sigmoid function, a hyperbolic tangent function (tanh function), a normalized linear function, or a signum function (sign function)).

In this way, third transfer-function updating circuit 65 performs nonlinear processing using a nonlinear function on the output signal of third subtractor 61 and multiplies a resultant signal by the signals stored in third memory circuit 62 and the third step-size parameter for controlling the learning speed for estimating the third transfer function corresponding to third echo 15 so as to calculate a third update coefficient. Then, the calculated third update coefficient is added to the third transfer function stored in third transfer-function memory circuit 64 to update the third transfer function.

Moreover, control circuit 37 causes third echo canceller 60 to update the third transfer function used to estimate the third echo signal during a period in which first voice synthesis circuit 35 is outputting the first translated voice. That is, the third transfer function is updated according to the formula for the updating of the third transfer function, given by Expression 9 above, during a period in which third echo 15 is present.

[1-2-4. Fourth Echo Canceller 70]

Fourth echo canceller 70 is a circuit that, when fourth echo 16 refers to a phenomenon in which the second translated voice whose sound level has been amplified by second loudspeaker 24 enters into second microphone 23, estimates a fourth echo signal indicating fourth echo 16 from the second translated voice and the fourth transfer function corresponding to fourth echo 16 and removes the fourth echo signal from the output signal of second microphone 23. The fourth echo signal as used herein refers to a signal indicating the degree of fourth echo 16.

In the present embodiment, fourth echo canceller 70 is a circuit that removes the fourth echo signal from the output signal of first echo canceller 40 and outputs a resultant signal after the removal to first crosstalk canceller 80. It is also a digital signal processing circuit that processes digital voice data in a time-base domain.

More specifically, fourth echo canceller 70 includes fourth transfer-function memory circuit 74, fourth memory circuit 72, fourth convolution arithmetic unit 73, fourth subtractor 71, and fourth transfer-function updating circuit 75.

Fourth transfer-function memory circuit 74 stores the fourth transfer function corresponding to fourth echo 16.

Fourth memory circuit 72 stores the output signal of second voice synthesis circuit 36.

Fourth convolution arithmetic unit 73 generates a fourth interfering signal (i.e., fourth echo signal) by convolution of a signal stored in fourth memory circuit 72 and a fourth transfer function stored in fourth transfer-function memory circuit 74. For example, fourth convolution arithmetic unit 73 is an N-tap FIR filter that performs a convolution operation given by Expression 10 below.

## [Expression 10]

$$y4'_t = \sum_{i=0}^{N-1} \{H4(i)_t \times x4(t-i)\}$$

Here, $y4'_t$ is the fourth interfering signal at time t, N is the number of taps in the FIR filter, $H4(i)_t$ is the i-th fourth transfer function among N fourth transfer functions stored in fourth transfer-function memory circuit 74 at time t, and $x4(t-i)$ is the (t-i)-th signal among the signals stored in fourth memory circuit 72.

Fourth subtractor 71 removes the fourth interfering signal output from fourth convolution arithmetic unit 73 from the output signal of first echo canceller 40 and outputs a resultant signal as the output signal of fourth echo canceller 70. For example, fourth subtractor 71 performs a subtraction given by Expression 11 below.

## [Expression 11]

$$e4_t = y4_t - y4'_t$$

Here, $e4_t$ is the output signal of fourth subtractor 71 at time t, and $y4_t$ is the output signal of first echo canceller 40 at time t.

Fourth transfer-function updating circuit 75 updates a fourth transfer function stored in fourth transfer-function memory circuit 74 on the basis of the output signal of fourth subtractor 71 and a signal stored in fourth memory circuit 72. For example, fourth transfer-function updating circuit 75 updates a fourth transfer function stored in fourth transfer-function memory circuit 74 through independent component analysis based on the output signal of fourth subtractor 71 and a signal stored in fourth memory circuit 72, as given by Expression 12 below, so that the output signal of fourth subtractor 71 and the signal stored in fourth memory circuit 72 become independent of each other.

## [Expression 12]

$$H4(j)_{t+1} = H4(j)_t + \alpha4 \times \varphi4(e4_t) \times x4(t-j)$$

Here, $H4(j)_{t+1}$ is the j-th fourth transfer function among N fourth transfer functions stored in fourth transfer-function memory circuit 74 at time t + 1 (i.e., after the update), $H4(j)_t$ is the j-th fourth transfer function among the N fourth transfer functions stored in fourth transfer-function memory circuit 74 at time t (i.e., before the update), a4 is a fourth step-size parameter for controlling the learning speed for estimating the fourth transfer function corresponding to fourth echo 16, and φ4 is a nonlinear function (e.g., a sigmoid function, a hyperbolic tangent function (tanh function), a normalized linear function, or a signum function (sign function)).

In this way, fourth transfer-function updating circuit 75 performs nonlinear processing using a nonlinear function on the output signal of fourth subtractor 71 and multiplies a resultant signal by the signal stored in fourth memory circuit 72 and the fourth step-size parameter for controlling the learning speed for estimating the fourth transfer function corresponding to fourth echo 16 so as to calculate a fourth update coefficient. Then, the calculated fourth update coefficient is added to the fourth transfer function stored in fourth transfer-function memory circuit 74 to update the fourth transfer function.

Moreover, control circuit 37 causes fourth echo canceller 70 to update the fourth transfer function used to estimate the fourth echo signal during a period in which second voice synthesis circuit 36 is outputting the second translated voice. That is, the fourth transfer function is updated based on the formula for the updating of the fourth transfer function, given by Expression 12 above, during a period in which fourth echo 16 is present.

[1-2-5. First Crosstalk Canceller 80]

First crosstalk canceller 80 is a circuit that, when first crosstalk 17 refers to a phenomenon in which the first voice enters into second microphone 23, estimates a first crosstalk signal indicating first crosstalk 17 from the first voice and removes the first crosstalk signal from the output signal of second microphone 23. That is, first crosstalk canceller 80 is a circuit that estimates a fifth interfering signal (i.e., first crosstalk signal) indicating the degree of first crosstalk 17 from the output signal of second crosstalk canceller 90 based on the first voice and removes the fifth interfering signal from the output signal of fourth echo canceller 70 based on the output signal of second microphone 23.

In the present embodiment, first crosstalk canceller 80 is a circuit that outputs a signal obtained by the removal of the fifth interfering signal to second voice recognition circuit 32. It is also a digital signal processing circuit that processes digital voice data in a time-base domain. The output signal of second crosstalk canceller 90 corresponds to the input signal of first voice recognition circuit 31 as illustrated in FIG. 2.

More specifically, first crosstalk canceller 80 includes fifth transfer-function memory circuit 84, fifth memory circuit 82, fifth convolution arithmetic unit 83, fifth subtractor 81, and fifth transfer-function updating circuit 85.

Fifth transfer-function memory circuit 84 stores the fifth transfer function estimated as the transfer function of first crosstalk 17.

Fifth memory circuit 82 stores the output signal of second crosstalk canceller 90.

Fifth convolution arithmetic unit 83 generates the fifth interfering signal by convolution of a signal stored in fifth memory circuit 82 and a fifth transfer function stored in fifth transfer-function memory circuit 84. For example, fifth convolution arithmetic unit 83 is an N-tap FIR filter that performs a convolution operation given by Expression 13 below.

[Expression 13]

$$y5'_t = \sum_{i=0}^{N-1} \{H5(i)_t \times x5(t-i)\}$$

Here, y5't is the fifth interfering signal at time t, N is the number of taps in the FIR filter, H5(i)$_t$ is the i-th fifth transfer function among N fifth transfer functions stored in fifth transfer-function memory circuit 84 at time t, and x5(t-i) is the (t-i)-th signal among the signals stored in fifth memory circuit 82.

Fifth subtractor 81 removes the fifth interfering signal output from fifth convolution arithmetic unit 83 from the output signal of fourth echo canceller 70 and outputs a resultant signal as the output signal of first crosstalk canceller 80. For example, fifth subtractor 81 performs a subtraction given by Expression 14 below.

[Expression 14]

$$e5_t = y5_t - y5'_t$$

Here, e5t is the output signal of fifth subtractor 81 at time t, and y5t is the output signal of fourth echo canceller 70 at time t.

Fifth transfer-function updating circuit 85 updates a fifth transfer function stored in fifth transfer-function memory circuit 84 on the basis of the output signal of fifth subtractor 81 and a signal stored in fifth memory circuit 82. For example, fifth transfer-function updating circuit 85 updates a fifth transfer function stored in fifth transfer-function memory circuit 84 through independent component analysis based on the output signal of fifth subtractor 81 and a signal stored in fifth memory circuit 82, as given by Expression 15 below, so that the output signal of fifth subtractor 81 and the signal stored in fifth memory circuit 82 become independent of each other.

[Expression 15]

$$H5(j)_{t+1} = H5(j)_t + \alpha 5 \times \varphi 5(e5_t) \times x5(t-j)$$

Here, H5(j)$_{t+1}$ is the j-th fifth transfer function among N fifth transfer functions stored in fifth transfer-function memory circuit 84 at time t + 1 (i.e., after the update), H5(j)t is the j-th fifth transfer function among the N fifth transfer functions stored in fifth transfer-function memory circuit 84 at time t (i.e., before the update), a5 is a fifth step-size parameter for controlling the learning speed for estimating the fifth transfer function corresponding to first crosstalk 17, and φ5 is a nonlinear function (e.g., a sigmoid function, a hyperbolic tangent function (tanh function), a normalized linear function, or a signum function (sign function)).

In this way, fifth transfer-function updating circuit 85 performs nonlinear processing using a nonlinear function on the output signal of fifth subtractor 81 and multiplies a resultant signal by the signal stored in fifth memory circuit 82 and the fifth step-size parameter for outputting the learning speed for estimating the fifth transfer function corresponding to first crosstalk 17 so as to calculate a fifth update coefficient. Then, the calculated fifth update coefficient is added to the fifth transfer function stored in fifth transfer-function memory circuit 84 to update the fifth transfer function.

Translation device 20 according to the present embodiment is designed such that, for the voice of first speaker 11 at one time, the time when the output signal of second crosstalk canceller 90 is input to first crosstalk canceller 80 is the same as or earlier than the time when the voice of first speaker 11 enters into second microphone 23. That is, causality is defined so as to allow first crosstalk canceller 80 to cancel first crosstalk 17. This can be appropriately implemented by taking into consideration factors that determine the time when the output signal of second crosstalk canceller 90 is input to first crosstalk canceller 80 (e.g., the rate of A/D conversion, the processing speed of second echo canceller 50, the processing speed of third echo canceller 60, and the processing speed of second crosstalk canceller 90) and factors that determine the time when the voice of first speaker 11 enters into second microphone 23 (e.g., a positional relationship between first speaker 11 and second microphone 23).

[1-2-6. Second Crosstalk Canceller 90]

Second crosstalk canceller 90 is a circuit that, when second crosstalk 18 refers to a phenomenon in which the second voice enters into first microphone 21, estimates a second crosstalk signal indicating second crosstalk 18 from the second voice and removes the second crosstalk signal from the output signal of first microphone 21. That is, second crosstalk canceller 90 is a circuit that estimates a sixth interfering signal (i.e., second crosstalk signal) indicating the degree of second crosstalk 18 from the output signal of first crosstalk canceller 80 based on the second voice, and removes the sixth interfering signal from the output signal of third echo canceller 60 based on the output signal of first microphone 21.

In the present embodiment, second crosstalk canceller 90 is a circuit that outputs a signal obtained by the removal of the sixth interfering signal to first voice recognition circuit 31. It is also a digital signal processing circuit that processes digital voice data in a time-base domain. The output signal of first crosstalk canceller 80 corresponds to the input signal of second voice recognition circuit 32 as illustrated in FIG. 2.

More specifically, second crosstalk canceller 90 includes sixth transfer-function memory circuit 94, sixth memory circuit 92, sixth convolution arithmetic unit 93, sixth subtractor 91, and sixth transfer-function updating circuit 95.

Sixth transfer-function memory circuit 94 stores the sixth transfer function estimated as the transfer function of second crosstalk 18.

Sixth memory circuit 92 stores the output signal of first crosstalk canceller 80.

Sixth convolution arithmetic unit 93 generates a sixth interfering signal by convolution of a signal stored in sixth memory circuit 92 and a sixth transfer function stored in sixth transfer-function memory circuit 94. for example, sixth convolution arithmetic unit 93 is an N-tap FIR filter that performs a convolution operation given by Expression 16 below.

[Expression 16]

$$y6'_t = \sum_{i=0}^{N-1} \{H6(i)_t \times x6(t - i)\}$$

Here, y6't is the sixth interfering signal at time t, N is the number of taps in the FIR filter, H6(i)$_t$ is the i-th sixth transfer function among N sixth transfer functions stored in sixth transfer-function memory circuit 94 at time t, and x6(t-i) is the (t-i)-th signal among signals stored in sixth memory circuit 92.

Sixth subtractor 91 removes the sixth interfering signal output from sixth convolution arithmetic unit 93 from the output signal of third echo canceller 60 and outputs a resultant signal as the output signal of second crosstalk canceller 90. For example, sixth subtractor 91 performs a subtraction given by Expression 17 below.

## [Expression 17]

$$e6_t = y6_t - y6'_t$$

Here, e6t is the output signal of sixth subtractor 91 at time t, and $y6_t$ is the output signal of third echo canceller 60 at time t.

Sixth transfer-function updating circuit 95 updates a sixth transfer function stored in sixth transfer-function memory circuit 94 on the basis of the output signal of sixth subtractor 91 and a signal stored in sixth memory circuit 92. For example, sixth transfer-function updating circuit 95 updates a sixth transfer function stored in sixth transfer-function memory circuit 94 through independent component analysis based on the output signal of sixth subtractor 91 and a signal stored in sixth memory circuit 92, as given by Expression 18 below, so that the output signal of sixth subtractor 91 and the signal stored in sixth memory circuit 92 become independent of each other.

## [Expression 18]

$$H6(j)_{t+1} = H6(j)_t + \alpha 6 \times \varphi 6(e6_t) \times x6(t - j$$

Here, $H6(j)_{t+1}$ is the j-th sixth transfer function among the N sixth transfer functions stored in sixth transfer-function memory circuit 94 at time t + 1 (i.e., after the update), $H6(j)t$ is the j-th sixth transfer function among the N sixth transfer functions stored in sixth transfer-function memory circuit 94 at time t (i.e., before the update), $\alpha 6$ is a sixth step-size parameter for controlling the learning speed for estimating the sixth transfer function corresponding to second crosstalk 18, and $\varphi 6$ is a nonlinear function (e.g., a sigmoid function, a hyperbolic tangent function (tanh function), a normalized linear function, or a signum function (sign function)).

In this way, sixth transfer-function updating circuit 95 performs nonlinear processing using a nonlinear function on the output signal of sixth subtractor 91 and multiplies a resultant signal by the signal stored in sixth memory circuit 92 and the sixth step-size parameter for controlling the learning speed for estimating the sixth transfer function corresponding to second crosstalk 18 so as to calculate a sixth update coefficient. Then, the calculated sixth update coefficient is added to the sixth transfer function stored in sixth transfer-function memory circuit 94 to update the sixth transfer function.

Translation device 20 according to the present embodiment is designed such that, for the voice of second speaker 12 at one time, the time when the output signal of first crosstalk canceller 80 is input to second crosstalk canceller 90 becomes the same as or earlier than the time when the voice of second speaker 12 enters into first microphone 21. That is, causality is defined so as to allow second crosstalk canceller 90 to cancel second crosstalk 18. This can be appropriately implemented by taking into consideration factors that determine the time when the output signal of first crosstalk canceller 80 is input to second crosstalk canceller 90 (e.g., the rate of A/D conversion rate, the processing speed of first echo canceller 40, the processing speed of fourth echo canceller 70, and the processing speed of first crosstalk canceller 80) and factors that determine the time when the voice of second speaker 12 enters into first microphone 21 (e.g., a positional relationship between second speaker 12 and first microphone 21).

[1-3. Operations]

Translation device 20 configured as described above according to the present embodiment operates as follows.

First language selection circuit 27 and second language selection circuit 28 respectively receive a selection of the first language used by first speaker 11 from first speaker 11 and a selection of the second language used by second speaker 12 from second speaker 12 and notify control circuit 37 of the selections in advance.

The voice of first speaker 11 enters into first microphone 21. In addition to the voice of first speaker 11, second echo 14, third echo 15, and second crosstalk 18 also enters into first microphone 21. Second echo canceller 50 removes the second interfering signal (i.e., second echo signal) from the output signal of first microphone 21. The second interfering signal is a signal indicating (estimating) the degree of second echo 14. Thus, the output signal of second echo canceller 50 indicates a voice obtained by removing the influence of second echo 14 from the voice that has entered into first microphone 21.

Then, third echo canceller 60 removes the third interfering signal (i.e., third echo signal) from the output signal of second echo canceller 50. The third interfering signal is a signal indicating (estimating) the degree of third echo 15. Thus, the output signal of third echo canceller 60 is the signal obtained by removing the influence of third echo 15 from the output signal of second echo canceller 50.

Then, second crosstalk canceller 90 removes the sixth interfering signal (i.e., second crosstalk signal) from the output signal of third echo canceller 60. The sixth interfering signal is a signal indicating (estimating) the degree of second crosstalk 18. Thus, the output signal of second crosstalk canceller 90 is the signal obtained by removing the influence of second crosstalk 18 from the output signal of third echo canceller 60, and is output to first voice recognition circuit 31 and first crosstalk canceller 80.

Then, first voice recognition circuit 31 receives input of digital voice data obtained as a result of removing second echo 14 from the voice of first speaker 11 via second echo canceller 50, removing third echo 15 from a resultant voice via third echo canceller 60, and removing second crosstalk 18 from a resultant voice via second crosstalk canceller 90. First voice recognition circuit 31 recognizes the voice indicated by the input digital voice data on the basis of information on the first language of first speaker 11 instructed by control circuit 37, and outputs a resultant first character string to first translation circuit 33 and control circuit 37.

Then, first translation circuit 33 converts the first character string in the first language of first speaker 11 instructed by control circuit 37 and output from first voice recognition circuit 31 into a third character string in the second language of second speaker 12, and outputs the third character string resulting from the conversion to first voice synthesis circuit 35 and control circuit 37.

Then, first voice synthesis circuit 35 converts the third character string in the second language output from first translation circuit 33 into an output signal in the second language on the basis of information on the second language instructed by control circuit 37, outputs the output signal in the second language to first loudspeaker 22, first echo canceller 40, and third echo canceller 60, and outputs information on a period in which the output signal in the second language is being output, to control circuit 37.

The output signal in the second language output from first voice synthesis circuit 35 is input to first loudspeaker 22 and output as a first translated voice.

Similarly, the voice of second speaker 12 enters into second microphone 23. In addition to the voice of second speaker 12, first echo 13, fourth echo 16, and first crosstalk 17 also enters into second microphone 23. First echo canceller 40 removes the first interfering signal (i.e., first echo signal) from the output signal of second microphone 23. The first interfering signal is a signal indicating (estimating) the degree of first echo 13. Thus, the output signal of first echo canceller 40 is the signal indicating a voice obtained by removing the influence of first echo 13 from the voice that has entered into second microphone 23.

Then, fourth echo canceller 70 removes the fourth interfering signal (i.e., fourth echo signal) from the output signal of first echo canceller 40. The fourth interfering signal is a signal indicating (estimating) the degree of fourth echo 16. Thus, the output signal of fourth echo canceller 70 is the signal obtained by removing the influence of fourth echo 16 from the output signal of first echo canceller 40.

Then, first crosstalk canceller 80 removes the fifth interfering signal (i.e., first crosstalk signal) from the output signal of fourth echo canceller 70. The fifth interfering signal is a signal indicating (estimating) the degree of first crosstalk 17. Thus, the output signal of first crosstalk canceller 80 is the signal obtained by removing the influence of first crosstalk 17 from the output signal of fourth echo canceller 70, and is output to second voice recognition circuit 32 and second crosstalk canceller 90.

Then, second voice recognition circuit 32 receives input of digital voice data obtained as a result of removing first echo 13 from the voice of second speaker 12 via first echo canceller 40, removing fourth echo 16 from a resultant voice via fourth echo canceller 70, and removing first crosstalk 17 from a resultant voice via first crosstalk canceller 80. Second voice recognition circuit 32 recognizes the voice indicated by the input digital voice data on the basis of information on the second language of second speaker 12 instructed by control circuit 37, and outputs a resultant second character string to second translation circuit 34 and control circuit 37.

Then, second translation circuit 34 converts the second character string in the second language of second speaker 12 instructed by control circuit 37 and output from second voice recognition circuit 32 into a fourth character string in the first language of first speaker 11, and outputs the fourth character string resulting from the conversion to second voice synthesis circuit 36 and control circuit 37.

Then, second voice synthesis circuit 36 converts the fourth character string in the first language output from second translation circuit 34 into an output signal in the first language on the basis of information on the first language instructed from control circuit 37, outputs the output signal in the first language to second loudspeaker 24, second echo canceller 50, and fourth echo canceller 70, and outputs information on a period in which the output signal in the first language is being output, to control circuit 37.

The output signal in the first language output from second voice synthesis circuit 36 is input to second loudspeaker 24 and output as a second translated voice.

Control circuit 37 outputs character strings to image-signal generation circuit 38, the character strings including the first character string in the first language output from first voice recognition circuit 31 as a the result of recognizing the voice of first speaker 11, the third character string obtained by converting the voice of first speaker 11 in the first language into the second language and output from first translation circuit 33, the second character string in the second language output from second voice recognition circuit 32 as a result of recognizing the voice of second speaker 12, and the fourth character string obtained by converting the voice of second speaker 12 in the second language output from second translation circuit 34 into the first language.

Control circuit 37 also outputs information on a period of output of the first translated voice from first voice synthesis circuit 35 to first echo canceller 40 and third echo canceller 60 and causes first echo canceller 40 and third echo canceller 60 to update transfer functions during this period. The information on the period of output of the first translated voice as used herein refers to information indicating a period in which first voice synthesis circuit 35 is outputting the first translated voice.

Control circuit 37 further outputs information on a period of output of the second translated voice from second voice synthesis circuit 36 to second echo canceller 50 and fourth echo canceller 70 and causes second echo canceller 50 and fourth echo canceller 70 to update transfer functions during this period. The information on the period of output of the second translated voice as used herein refers to a period in which second voice synthesis circuit 36 is outputting the second translated voice.

Image-signal generation circuit 38 outputs the first character string in the first language output from first voice recognition circuit 31 as a result of recognizing the voice of first speaker 11, and the fourth character string obtained by converting the voice of second speaker 12 in the second language output from second translation circuit 34 into the first language, to second display circuit 26. Image-signal generation circuit 38 further outputs the second character string in the second language output from second voice recognition circuit 32 as a result of recognizing the voice of second speaker 12, and the third character string obtained by converting the voice of first speaker 11 in the first language output from first translation circuit 33 into the second language, to first display circuit 25.

Translation device 20 processes the voices of first speaker 11 and second speaker 12 as described above.

According to the above, the output signal to be input to first voice recognition circuit 31 is only the output signal obtained by removing the influences of second echo 14, third echo 15, and second crosstalk 18 from the voice that has entered into first microphone 21, i.e., only the voice of first speaker 11 with acoustic noise removed therefrom. Moreover, the first translated voice to be output from first loudspeaker 22 is only the output signal obtained by removing the influences of second echo 14, third echo 15, and second crosstalk 18 from the voice that has entered into first microphone 21, i.e., only the voice of first speaker 11 with acoustic noise removed therefrom.

The output signal to be input to second voice recognition circuit 32 is only the output signal obtained by removing the influences of first echo 13, fourth echo 16, and first crosstalk 17 from the voice that has entered into second microphone 23, i.e., only the voice of second speaker 12 with acoustic noise removed therefrom. Moreover, the second translated voice to be output from second loudspeaker 24 is only the output signal obtained by removing the influences of first echo 13, fourth echo 16, and first crosstalk 17 from the voice that has entered into second microphone 23, i.e., only the voice of second speaker 12 with acoustic noise removed therefrom.

It goes without saying that the degree to which the acoustic noise is removed depends on factors such as the accuracy of the transfer functions stored in first echo canceller 40, second echo canceller 50, third echo canceller 60, fourth echo canceller 70, first crosstalk canceller 80, and second crosstalk canceller 90, or parameters in the formula for the updating of the transfer functions given by Expressions 3, 6, 9, 12, 15, and 18 above.

Control circuit 37 also causes first echo canceller 40, second echo canceller 50, third echo canceller 60, and fourth echo canceller 70 to update their transfer function under fixed conditions. Flowcharts for such updating will be described hereinafter.

FIG. 3 is a flowchart for updating the transfer functions of first echo canceller 40 and third echo canceller 60.

As described above, control circuit 37 outputs the information on the period of output of the first translated voice from first voice synthesis circuit 35 to first echo canceller 40 and third echo canceller 60. Control circuit 37 determines whether or not first voice synthesis circuit 35 is outputting the first translated voice (step S100).

Then, if the answer in step S100 is YES, control circuit 37 causes first echo canceller 40 and third echo canceller 60 to update their transfer function (step S101).

If the answer in step S100 is NO, control circuit 37 ends the processing.

As described above, control circuit 37 causes the transfer functions to be updated based on the formulas for the updating of the transfer functions given by Expressions 3 and 9 above during the periods in which first echo 13 and third echo 15 are present.

FIG. 4 is a flowchart for updating the transfer functions of second echo canceller 50 and fourth echo canceller 70.

As described above, control circuit 37 outputs the information on the period of output of the second translated voice from second voice synthesis circuit 36 to second echo canceller 50 and fourth echo canceller 70. Control circuit 37 determines whether or not second voice synthesis circuit 36 is outputting the second translated voice (step S200).

Then, if the answer in step S200 is YES, control circuit 37 causes second echo canceller 50 and fourth echo canceller 70 to update their transfer function (step S201).

If the answer in step S200 is NO, control circuit 37 ends the processing.

As described above, control circuit 37 causes the transfer functions to be updated based on the formulas for the updating of the transfer functions given by Expressions 6 and 12 above during the periods in which second echo 14 and fourth echo 16 are present.

In Embodiment 1 illustrated in FIG. 1, conversations are held under conditions in which first microphone 21 and second loudspeaker 24 are close to each other in distance and second microphone 23 and first loudspeaker 22 are close to each other in distance. Thus, first echo 13 and second echo 14 have great influence. As a result, first echo canceller 40 and second echo canceller 50 are highly important and become essential constituent elements.

On the other hand, if the distance between first microphone 21 and second loudspeaker 24 increases and the distance between second microphone 23 and first loudspeaker 22 increases, first echo 13 and second echo 14 will have less influence. Thus, first echo canceller 40 and second echo canceller 50 may not be highly important and may not be essential constituent elements. In that case, a configuration is also possible in which first echo canceller 40 and second echo canceller 50 are omitted from the configuration according to Embodiment 1 illustrated in FIG. 2. That is, the output signal of first microphone 21 is input to third echo canceller 60 without the intervention of second echo canceller 50, and the output signal of second microphone 23 is input to fourth echo canceller 70 without the intervention of first echo canceller 40.

Although not shown, translation device 20 may further include a first voice sex-determination circuit and a second voice sex-determination circuit, in addition to the configuration according to Embodiment 1 illustrated in FIG. 1.

The first voice sex-determination circuit determines the sex of first speaker 11 on the basis of the first voice.

The second voice sex-determination circuit determines the sex of second speaker 12 on the basis of the second voice.

In this case, control circuit 37 may cause first voice synthesis circuit 35 to output a synthesized voice of the same sex as a result of the determination by the first voice sex-determination circuit and may cause second voice synthesis circuit 36 to output a synthesized voice of the same sex as a result of the determination by the second voice sex-determination circuit.

As illustrated in FIG. 1, translation device 20 according to Embodiment 1 includes first camera 291 and second camera 292. Although not shown, translation device 20 may further include a first face recognition circuit, a second face recognition circuit, and a database for storing a pair of each speaker and the language of the speaker.

First camera 291 captures an image of the face of the first speaker. First camera 291 outputs a first image signal to the first face recognition circuit.

Second camera 292 captures the face of the second speaker. Second camera 292 outputs a second image signal to the second face recognition circuit.

The first face recognition circuit specifies first speaker 11 on the basis of the first image signal output from the first camera.

The second face recognition circuit specifies second speaker 12 on the basis of the second image signal output from the second camera.

The database stores a pair of each speaker and the language of the speaker.

In this case, when the language of first speaker 11 specified by the first face recognition circuit is registered in the database, control circuit 37 may notify first voice recognition circuit 31, first translation circuit 33, second translation circuit 34, and first voice synthesis circuit 35 of the first language of first speaker 11, and when the language of second speaker 12 specified by the second face recognition circuit is registered in the database, control circuit 37 may notify second voice recognition circuit 32, first translation circuit 33, second translation circuit 34, and second voice synthesis circuit 36 of the second language of second speaker 12.

In addition to first camera 291 and second camera 292 described above, translation device 20 may further include a first image sex-determination circuit and a second image sex-determination circuit.

First camera 291 captures the face of the first speaker. First camera 291 outputs a first image signal to the first image sex-determination circuit.

Second camera 292 captures the face of the second speaker. Second camera 292 outputs a second image signal to the second image sex-determination circuit.

The first image sex-determination circuit determines the sex of the first speaker on the basis of the first image signal output from first camera 291.

The second image sex-determination circuit determines the sex of the second speaker on the basis of the second image signal output from second camera 292.

In this case, control circuit 37 may further cause the first voice synthesis circuit to output a synthesized voice of the same sex as a result of the determination by the first image sex-determination circuit, and may further cause the second voice synthesis circuit to output a synthesized voice of the same sex as a result of the determination by the second image sex-determination circuit.

A configuration is also possible that allows shared use of first memory circuit 42 of first echo canceller 40 and third memory circuit 62 of third echo canceller 60. That is, since the signal stored in first memory circuit 42 of first echo canceller 40 and the signal stored in third memory circuit 62 of third echo canceller 60 are both the output signals of first voice synthesis circuit 35, the number of memory circuits required in portions corresponding to first memory circuit 42 and third memory circuit 62 can be reduced by sharing the use of first memory circuit 42 and third memory circuit 62.

Moreover, a configuration is also possible that allows shared use of second memory circuit 52 of second echo canceller 50 and fourth memory circuit 72 of fourth echo canceller 70. That is, since the signal stored in second memory circuit 52 of second echo canceller 50 and the signal stored in fourth memory circuit 72 of fourth echo canceller 70 are both the output signal of second voice synthesis circuit 36, the number of memory circuits required in portions corresponding to second memory circuit 52 and fourth memory circuit 72 can be reduced by sharing the use of second memory circuit 52 and fourth memory circuit 72.

[1-4. Advantageous Effects]

As described above, translation device 20 is a translation device for, in conversations between first speaker 11 and second speaker 12, translating the language of one speaker into the language of the other speaker, and outputting a synthesized voice after amplifying the sound level of the synthesized voice, and includes first microphone 21 that receives input of the first voice of first speaker 11, first voice recognition circuit 31 that recognizes the first voice to output the first character string, first translation circuit 33 that translates the first character string output from first voice recognition circuit 31 into the language of second speaker 12 to output a third character string, first voice synthesis circuit 35 that converts the third character string output from first translation circuit 33 into the first translated voice, first loudspeaker 22 that amplifies the sound level of the first translated voice, second microphone 23 that receives input of the second voice of second speaker 12, second voice recognition circuit 32 that recognizes the second voice to output the second character string, second translation circuit 34 that translates the second character string output from second voice recognition circuit 32 into the language of first speaker 11 to output the fourth character string, second voice synthesis circuit 36 that converts the fourth character string output from second translation circuit 34 into the second translated voice, second loudspeaker 24 that amplifies the sound level of the second translated voice, first echo canceller 40 that, when first echo 13 refers to a phenomenon in which the first translated voice whose sound level has been amplified by first loudspeaker 22 enters into second microphone 23, estimates the first echo signal indicating first echo 13 from the first translated voice and the first transfer function corresponding to first echo 13 and removes the first echo signal from the output signal of second microphone 23, second echo canceller 50 that, when second echo 14 refers to a phenomenon in which the second translated voice whose sound level has been amplified by second loudspeaker 24 enters into first microphone 21, estimates the second echo signal indicating second echo 14 from the second translated voice and the second transfer function corresponding to second echo 14 and removes the second echo signal from the output signal of first microphone 21, and control circuit 37. Control circuit 37 causes first echo canceller 40 to update the first transfer function used to estimate the first echo signal during a period in which first voice synthesis circuit 35 is outputting the first translated voice, and causes second echo canceller 50 to update the second transfer function used to estimate the second echo signal during a period in which second voice synthesis circuit 36 is outputting the second translated voice.

Translation device 20 as described above can assist conversations between two speakers while stably recognizing voices by removing acoustic noise including echo, even in the case where voices of a plurality of speakers and a plurality of synthesized voices are present simultaneously overlapping one another, the synthesized voices being output as a result of recognizing and translating the voice of each speaker into a language on the other end and synthesizing resultant voices. Even if the first voice of first speaker 11, the second voice of second speaker 12, the first translated voice from first voice synthesis circuit 35, and the second translated voice from second voice synthesis circuit 36 are present simultaneously, the accuracy of voice recognition of first voice recognition circuit 31 and second voice recognition circuit 32 will not deteriorate because the echo cancellers cancel echo. Moreover, since first echo canceller 40 updates the first transfer function when first voice synthesis circuit 35 is outputting a synthesized voice, the first transfer function is not updated unnecessarily when voices other than the synthesized voice are present. This improves the accuracy with which first echo canceller 40 estimates the first transfer function. That is, it is possible to prevent unnecessary updating from corrupting the first transfer function stored in first transfer-function memory circuit 44 of first echo canceller 40 and to improve accuracy in removing the first echo signal. Similarly, since second echo canceller 50 updates the second transfer function when second voice synthesis circuit 36 is outputting a synthesized voice, the second transfer function is not updated unnecessarily when voices other than the synthesized voice are present. This improves the accuracy with which second echo canceller 50 estimates the second transfer function. That is, it is possible to prevent unnecessary updating from corrupting the second transfer function stored in second transfer-function memory circuit 54 of second echo canceller 50 and to the accuracy in removing the second echo signal.

Translation device 20 may further include, for example, third echo canceller 60 that, when third echo 15 refers to a phenomenon in which the first translated voice whose sound level has been amplified by first loudspeaker 22 enters into first microphone 21, estimates the third echo signal indicating third echo 15 from the first translated voice and the third transfer function corresponding to third echo 15 and removes the third echo signal from the output signal of first microphone 21, and fourth echo canceller 70 that, when fourth echo 16 refers to a phenomenon in which the second translated voice whose sound level has been amplified by second loudspeaker 24 enters into second microphone 23, estimates the fourth echo signal indicating fourth echo 16 from the second translated voice and the fourth transfer function corresponding to fourth echo 16 and removes the fourth echo signal from the output signal of second microphone 23. Control circuit 37 cause third echo canceller 60 to update the third transfer function used to estimate the third echo signal during a period in which first voice synthesis circuit 35 is outputting the first translated voice, and causes fourth echo canceller 70 to update the fourth transfer function used to estimate the fourth echo signal during a period in which second voice synthesis circuit 36 is outputting the second translated voice.

Translation device 20 as described above can assist conversations between two speakers while stably recognizing voices by removing acoustic noise including echo, even in the case where voices of a plurality of speakers and a plurality of synthesized voices are present simultaneously overlapping one another, the synthesized voices being output as a result of recognizing and translating the voice of each speaker into a language on the other end and synthesizing resultant voices. Moreover, since first echo canceller 40 and third echo canceller 60 update the first transfer function and the third transfer function, respectively, when first voice synthesis circuit 35 is outputting a synthesized voice, the first and third transfer functions are not updated unnecessarily when voices other than the synthesized voice are present. This improves the accuracy with which first echo canceller 40 and third echo canceller 60 estimate the first transfer function and the third transfer function. That is, it is possible to prevent unnecessary updating from corrupting the third transfer function stored in third transfer-function memory circuit 64 of third echo canceller 60 and to improve accuracy in removing the third echo signal. Similarly, since second echo canceller 50 and fourth echo canceller 70 update the second transfer function and the fourth transfer function, respectively, when second voice synthesis circuit 36 is outputting a synthesized voice, the second and fourth transfer functions are not updated unnecessarily when voices other than the synthesized voice are present. This improves the accuracy with which second echo canceller 50 and fourth echo canceller 70 estimate the second transfer function and the fourth transfer function. That is, it is possible to prevent unnecessary updating from corrupting the fourth transfer function stored in fourth transfer-function memory circuit 74 of fourth echo canceller 70 and to improve accuracy in removing the fourth echo signal.

Translation device 20 is also, for example, a translation device for, in conversations between first speaker 11 and second speaker 12, translating the language of one speaker into the language of the other speaker and outputting a synthesized voice after amplifying the sound level of the synthesized voice, and includes first microphone 21 that receives input of the first voice of first speaker 11, first voice recognition circuit 31 that recognizes the first voice to output a first character string, first translation circuit 33 that translates the first character string output from first voice recognition circuit 31 into the language of second speaker 12 to output a third character string, first voice synthesis circuit 35 that converts the third character string output from first translation circuit 33 into the first translated voice, first loudspeaker 22 that amplifies the sound level of the first translated voice, second microphone 23 that receives input of the second voice of second speaker 12, second voice recognition circuit 32 that recognizes the second voice to output a second character string, second translation circuit 34 that translates the second character string output from second voice recognition circuit 32 into the language of first speaker 11 to output the fourth character string, second voice synthesis circuit 36 that converts the fourth character string signal output from second translation circuit 34 into the second translated voice, second loudspeaker 24 that amplifies the sound level of the second translated voice, third echo canceller 60 that, when third echo 15 refers to a phenomenon in which the first translated voice whose sound level has been amplified by first loudspeaker 22 enters into first microphone 21, estimates the third echo signal indicating third echo 15 from the first translated voice and the third transfer function corresponding to third echo 15 and removes the third echo signal from the output signal of first microphone 21, fourth echo canceller 70 that, when fourth echo 16 refers to a phenomenon the second translated voice whose sound level has been amplified by second loudspeaker 24 enters into second microphone 23, estimates the fourth echo signal indicating fourth echo 16 from the second translated voice and the fourth transfer function corresponding to fourth echo 16 and removes the fourth echo signal from the output signal of second microphone 23, and control circuit 37. Control circuit 37 causes third echo canceller 60 to update the third transfer function used to estimate the third echo signal during a period in which first voice synthesis circuit 35 is outputting the first translated voice, and causes fourth echo canceller 70 to update the fourth transfer function used to estimate the fourth echo signal during a period in which second voice synthesis circuit 36 is outputting the second translated voice.

Translation device 20 as described above can assist conversations between two speakers while stably recognizing voices by removing acoustic noise including echo, even in the case where voices of a plurality of speakers and a plurality of synthesized voices are present simultaneously overlapping one another, the synthesized voices being output as result of recognizing and translating the voice of each speaker into a language on the other end and synthesizing resultant voices. Moreover, since third echo canceller 60 updates the third transfer function when first voice synthesis circuit 35 is outputting a synthesized voice, the third transfer function is not updated unnecessarily when voices other than the synthesized voice are present. This improves the accuracy with which third echo canceller 60 estimates the third transfer function. That is, it is possible to prevent unnecessary updating from corrupting the third transfer function stored in third transfer-function memory circuit 64 of third echo canceller 60 and to improve accuracy in removing the third echo signal. Similarly, since fourth echo canceller 70 updates the fourth transfer function when second voice synthesis circuit 36 is outputting a synthesized voice, the fourth transfer function is not updated unnecessarily when voices other than the synthesized voice are present. This improves the accuracy with which fourth echo canceller 70 estimates the fourth transfer function. That is, it is possible prevent unnecessary updating from corrupting the fourth transfer function stored in fourth transfer-function memory circuit 74 of fourth echo canceller 70 and to improve accuracy in removing the fourth echo signal.

Translation device 20 may further include, for example, first crosstalk canceller 80 that, when first crosstalk 17 refers to a phenomenon in which the first voice enters into second microphone 23, estimates the first crosstalk signal indicating first crosstalk 17 from the first voice and removes the first crosstalk signal from the output signal of second microphone 23, and second crosstalk canceller 90 that, when second crosstalk 18 refers to a phenomenon in which the second voice enters into first microphone 21, estimates the second crosstalk signal indicating second crosstalk 18 from the second voice and removes the second crosstalk signal from the output signal of first microphone 21.

Translation device 20 as described above can assist conversations between two speakers while stably recognizing voices by removing acoustic noise including echo and crosstalk, even in the case where voices of a plurality of speakers and a plurality of synthesized voices are present simultaneously overlapping one another, the synthesized voices being output as a result of recognizing and translating the voice of each speaker into a language on the other end and synthesizing resultant voices.

Translation device 20 may further include, for example, first language selection circuit 27 that receives a selection of the first language used by first speaker 11 from first speaker 11 and notifies control circuit 37 of the selection, and second language selection circuit 28 that receives a selection of the second language used by second speaker 12 from second speaker 12 and notifies control circuit 37 of the selection. On the basis of the first language notified from first language selection circuit 27 and the second language notified from second language selection circuit 28, control circuit 37 causes first voice recognition circuit 31 to recognize voices in the first language, causes second voice recognition circuit 32 to recognizes voices in the second language, causes first translation circuit 33 to translate the first language into the second language, causes second translation circuit 34 to translate the second language into the first language, causes first voice synthesis circuit 35 to synthesize voices in the second language, and causes second voice synthesis circuit 36 to synthesize voices in the first language.

Translation device 20 as described above is capable of smooth translation and output of the first and second translated voices because languages to be translated are selected in advance.

Translation device 20 may further include, for example, the first voice sex-determination circuit that determines the sex of first speaker 11 on the basis of the first voice, and the second voice sex-determination circuit that determines the sex of second speaker 12 on the basis of the second voice. Control circuit 37 causes first voice synthesis circuit 35 to output a synthesized voice of the same sex as a result of the determination by the first voice sex-determination circuit, and causes second voice synthesis circuit 36 to output a synthesized voice of the same sex as a result of the determination by the second voice sex-determination circuit.

Translation device 20 as described above is capable outputting the first and second translated voices of the same sexes as the sexes of the speakers.

Translation device 20 may further include, for example, first camera 291 that captures the face of first speaker 11, the first face recognition circuit that specifies first speaker 11 on the basis of the first image signal output from first camera 291, second camera 292 that captures the face of second speaker 12, the second face recognition circuit that specifies second speaker 12 on the basis of the second image signal output from second camera 292, and the database that stores a pair of each speaker and the language of the speaker. When the language of first speaker 11 specified by the first face recognition circuit is registered in the database, control circuit 37 notifies first voice recognition circuit 31, first translation circuit 33, second translation circuit 34, and first voice synthesis circuit 35 of the first language of first speaker 11, and when the language of second speaker 12 specified by the second face recognition circuit is registered in the database, control circuit 37 notifies second voice recognition circuit 32, first translation circuit 33, second translation circuit 34, and second voice synthesis circuit 36 of the second language of second speaker 12.

Translation device 20 as described above is capable of recognizing persons from images and making a smooth translation to output the first and second translated voices because languages to be translated are registered in advance.

Translation device 20 may further include, for example, the first image sex-determination circuit that determines the sex of first speaker 11 on the basis of the first image signal output from first camera 291, and the second image sex-determination circuit that determines the sex of second speaker 12 on the basis of the second image signal output from second camera 292. Control circuit 37 causes first voice synthesis circuit 35 to output a synthesized voice of the same sex as a result of the determination by the first image sex-determination circuit, and causes second voice synthesis circuit 36 to output a synthesized voice of the same sex as a result of the determination by the second image sex-determination circuit.

Translation device 20 as described above is capable of recognizing the sexes of persons from images and outputting the first and second translated voices of the same sexes as the sexes of the speakers.

The translation method is a translation method for, in conversations between first speaker 11 and second speaker 12, translating the language of one speaker into the language of the other speaker and outputting a synthesized voice after amplifying the sound level of the synthesized voice, and includes a first input step of receiving input of the first voice of first speaker 11, a first voice recognition step of recognizing the first voice to output a first character string, a first translation step of translating the first character string output in the first voice recognition step into the language of second speaker 12 to output a third character string, a first voice synthesis step of converting the third character string output in the first translation step into the first translated voice, a first sound-level amplification step of amplifying the sound level of the first translated voice, a second input step of receiving input of the second voice of second speaker 12, a second voice recognition step of recognizing the second voice to output a second character string, a second translation step of translating the second character string output in the second voice recognition step into the language of first speaker 11 to output a fourth character string, a second voice synthesis step of converting the fourth character string output in the second translation step into the second translated voice, a second sound-level amplification step of amplifying the sound level of the second translated voice, a first echo cancelling step of, when first echo 13 refers to a phenomenon in which the first translated voice whose sound level has been amplified in the first sound-level amplification step is received in the second input step, estimating the first echo signal indicating first echo 13 from the first translated voice and the first transfer function corresponding to first echo 13 and removing the first echo signal from the output signal of the second input step, a second echo cancelling step of, when second echo 14 refers to a phenomenon in which the second translated voice whose sound level has been amplified in the second sound-level amplification step is received in the first input step, estimating the second echo signal indicating second echo 14 from the second translated voice and the second transfer function corresponding to second echo 14 and removing the second echo signal from the output signal of the first input step, and a control step of giving an instruction to update the first transfer function used to estimate the first echo signal in the first echo cancelling step during a period in which the first translated voice is being output in the first voice synthesis step, and an instruction to update the second transfer function used to estimate the second echo signal in the second echo cancelling step during a period in which the second translated voice is being output in the second voice synthesis step.

The translation method as described above can assist conversations between two speakers while stably recognizing voices by removing acoustic noise including echo, even in the case where voices of a plurality of speakers and a plurality of synthesized voices are present simultaneously overlapping one another, the synthesized voices being output as a result of recognizing and translating the voice of each speaker into a language on the other end and synthesizing resultant voices. Moreover, since first echo canceller 40 updates the first transfer function when first voice synthesis circuit 35 is outputting a synthesized voice, the first transfer function is not updated unnecessarily when voices other than the synthesized voice are present. This improves the accuracy with which first echo canceller 40 estimates the first transfer function. That is, it is possible to prevent unnecessary updating from corrupting the first transfer function stored in first transfer-function memory circuit 44 of first echo canceller 40 and to improve accuracy in removing the first echo signal. Similarly, since second echo canceller 50 updates the second transfer function when second voice synthesis circuit 36 is outputting a synthesized voice, the second transfer function is not updated unnecessarily when voices other than the synthesized voice are present. This improves the accuracy with which second echo canceller 50 estimates the second transfer function. That is, it is possible to prevent unnecessary updating from corrupting the second transfer function stored in second transfer-function memory circuit 54 of second echo canceller 50 and to improve accuracy in removing the second echo signal.

The translation method is also a translation method for, in conversations between first speaker 11 and second speaker 12, translating the language of one speaker into the language of the other speaker, and includes a first input step of receiving input of the first voice of first speaker 11, a first voice recognition step of recognizing the first voice to output a first character string, a first translation step of translating the first character string output in the first voice recognition step into the language of second speaker 12 to output a third character string, a first voice synthesis step of converting the third character string output in the first translation step into the first translated voice, a first sound-level amplification step of amplifying the sound level of the first translated voice, a second input step of receiving input of the second voice of second speaker 12, a second voice recognition step of recognizing the second voice to output a second character string, a second translation step of translating the second character string output in the second voice recognition step into the language of first speaker 11 to output the fourth character string, a second voice synthesis step of converting the fourth character string output in the second translation step into the second translated voice, a second sound-level amplification step of amplifying the sound level of the second translated voice, a third echo cancelling step of, when third echo 15 refers to a phenomenon in which the first translated voice output in the first sound-level amplification step is received in the first input step, estimating the third echo signal indicating third echo 15 from the first translated voice and the third transfer function corresponding to third echo 15 and removing the third echo signal from the output signal of the first input step, a fourth echo cancelling step of, when fourth echo 16 refers to a phenomenon in which the second translated voice output in the second sound-level amplification step is received in the second input step, estimating the fourth echo signal indicating fourth echo 16 from the second translated voice and the fourth transfer function corresponding to fourth echo 16 and removing the fourth echo signal from the output signal of the second input step, and a control step of giving an instruction to update the third transfer function used to estimate the third echo signal in the third echo cancelling step during a period in which the first translated voice is being output in the first voice synthesis step, and an instruction to update the fourth transfer function used to estimate the fourth echo signal in the fourth echo cancelling step during a period in which the second translated voice is being output in the second voice synthesis step.

The translation method as described above allows conversations between two speakers while stably recognizing voices by removing acoustic noise including echo, even in the case where voices of a plurality of speakers and a plurality of synthesized voices are present simultaneously overlapping one another, the synthesized voices being output as a result of recognizing and translating the voice of each speaker into a language on the other end and synthesizing resultant voices. Moreover, since third echo canceller 60 updates the third transfer function when first voice synthesis circuit 35 is outputting a synthesized voice, the third transfer function is not updated unnecessarily when voices other than the synthesized voice are present. This improves the accuracy with which third echo canceller 60 estimates the third transfer function. That is, it is possible to prevent unnecessary updating from corrupting the third transfer function stored in third transfer-function memory circuit 64 of third echo canceller 60 and to improve accuracy in removing the third echo signal. Similarly, since fourth echo canceller 70 updates the fourth transfer function when second voice synthesis circuit 36 is outputting a synthesized voice, the fourth transfer function is not updated unnecessarily when voices other than the synthesized voice are present. This improves the accuracy with which fourth echo canceller 70 estimates the fourth transfer function. That is, it is possible to prevent unnecessary updating from corrupting the fourth transfer function stored in fourth transfer-function memory circuit 74 of fourth echo canceller 70 and to improve accuracy in removing the fourth echo signal.

[1-5. Variations]

Although, in the embodiment described above, first transfer-function updating circuit 45 updates the transfer function according to Expression 3 given above, the transfer function may be updated according to a normalized expression as given by Expression 19 or 20 below.

[Expression 19]

$$H1(j)_{t+1} = H1(j)t + \alpha1 \times N \times \varphi1(e2_t) \times x1(t-j)/ \sum_{i=0}^{N-1} |\times 1(t-i)|$$

Here, N is the number of transfer functions stored in first transfer-function memory circuit 44, and |x1(t-i)| is the absolute value of x1(t-i).

[Expression 20]

$$H1(j)_{t+1} = H1(j)t + \alpha1 \times N \times \varphi1(e1_t) \times x1(t-j)/ \sum_{i=0}^{N-1} \times 1(t-i)^2$$

This allows first transfer-function updating circuit 45 to stably update the estimated transfer function without depending on the amplitude of the input signal $\times$ (t-j).

[Embodiment 2]

Embodiment 1 has described the cases where the first language of first speaker 11 and the second language of second speaker 12 are different languages. On the other hand, Embodiment 2 describes a configuration suitable for the case where the first language of first speaker 11 and the second language of second speaker 12 are the same language.

First, Embodiment 2 differs from Embodiment 1 in that the translation function and the function of outputting translated voices are unnecessary.

As will be described later, another difference is that a phenomenon called howling becomes an issue. Howling refers to a phenomenon in which the voice output from one speaker for outputting the voice of one speaker comes back and enters into a microphone for receiving input of the voice of the same speaker. Specifically, a phenomenon in which the voice output from first loudspeaker 22 comes back and enters into first microphone 21 is defined herein as first howling 15a, and a phenomenon in which the voice output from second loudspeaker 24 comes back and enters into second microphone 23 is defined as second howling 16a.

[2-1. Configuration]

FIG. 5 is a block diagram illustrating a configuration of translation device 20a according to Embodiment 2. More specifically, FIG. 5 is a block diagram illustrating a configuration for use in the case where the first language of first speaker 11 set by first language selection circuit 27 and the second language of second speaker 12 set by second language selection circuit 28 are the same language. In Embodiment 2, constituent elements that are common to those according to Embodiment 1 are given the same reference signs, and detailed descriptions thereof shall be omitted.

FIG. 5 differs from FIG. 2 in that first translation circuit 33, second translation circuit 34, first voice synthesis circuit 35, and second voice synthesis circuit 36 become unnecessary because the first language and the second language are the same language.

The voice of first speaker 11 is picked up by first microphone 21 and output from first loudspeaker 22 via first howling canceller 60a and second echo/second crosstalk canceller 90a, which will be described later. Thus, the input of first microphone 21 and the output of first loudspeaker 22 are the same voice of first speaker 11 (i.e., non-translated voice of first speaker 11), and accordingly third echo 15 in Embodiment 1 alters into first howling 15a. Therefore, third echo canceller 60 functions as first howling canceller 60a.

The voice of second speaker 12 is picked up by second microphone 23 and output from second loudspeaker 24 via second howling canceller 70a and first echo/first crosstalk canceller 80a, which will be described later. Thus, the input of second microphone 23 and the output of second loudspeaker 24 are the same voice of second speaker 12, (i.e., non-translated voice of second speaker 12), and accordingly fourth echo 16 in Embodiment 1 alters into second howling 16a. Therefore, fourth echo canceller 70 functions as second howling canceller 70a.

The sound sources of first echo 13a and first crosstalk 17a are the same voice of first speaker 11. Therefore, first crosstalk canceller 80 functions as first echo/first crosstalk canceller 80a. As a result, first echo canceller 40 becomes unnecessary.

The sound sources of second echo 14a and second crosstalk 18a are the same voice of second speaker 12. Therefore, second crosstalk canceller 90 functions as a second echo/second crosstalk canceller 90a. As a result, second echo canceller 50 becomes unnecessary.

Alternatively, control circuit 37 may deactivate first echo canceller 40, second echo canceller 50, first translation circuit 33, second translation circuit 34, first voice synthesis circuit 35, and second voice synthesis circuit 36.

[2-1-1. First Howling Canceller 60a]

First howling canceller 60a is a circuit that, when first howling 15a refers to a phenomenon in which the voice output from first loudspeaker 22 comes back and enters into first microphone 21, estimates a first howling signal indicating the degree of first howling 15a and removes the first howling signal from the output signal of first microphone 21. In the present embodiment, first howling canceller 60a is a circuit that removes the first howling signal from the output signal of first microphone 21 and outputs a resultant signal after the removal to second echo/second crosstalk canceller 90a, which will be described later. It is also a digital signal processing circuit that processes digital voice data in a time-base domain.

More specifically, first howling canceller 60a includes third transfer-function memory circuit 64, first delay unit 66, third memory circuit 62, third convolution arithmetic unit 63, third subtractor 61, and third transfer-function updating circuit 65. That is, first delay unit 66 is to third echo canceller 60 in FIG. 2.

Third transfer-function memory circuit 64 stores third transfer functions estimated as the transfer functions of first howling 15a.

First delay unit 66 delays the output signal of first howling canceller 60a.

Third memory circuit 62 stores signals output from first delay unit 66.

Third convolution arithmetic unit 63 generates the first howling signal by convolution of a signal stored in third memory circuit 62 and a third transfer function stored in third transfer-function memory circuit 64. For example, third convolution arithmetic unit 63 is an N-tap finite impulse response (FIR) filter that performs a convolution operation given by Expression 21 below.

[Expression 21]

$$y7'_t = \sum_{i=0}^{N-1} \{H7(i)_t \times x7(t - i - \tau 1)\}$$

Here, $y7'_t$ is the first howling signal at time t, N is the number of taps in the FIR filter, $H7(i)_t$ is the i-th third transfer function among N third transfer functions stored in third transfer-function memory circuit 64 at time t, x7(t-i-τ1) is the (t-i-τ1)-th signal among the signals stored in third memory circuit 62, and τ1 is the delay time caused by first delay unit 66.

Third subtractor 61 removes the first howling signal output from third convolution arithmetic unit 63 from the output signal of first microphone 21 and outputs a resultant signal as the output signal of first howling canceller 60a to second echo/second crosstalk canceller 90a. For example, third subtractor 61 performs a subtraction given by Expression 22 below.

[Expression 22]

$$e7_t = y7_t - y7'_t$$

Here, $e7_t$ is the output signal of third subtractor 61 at time t, and $y7_t$ is the output signal of first microphone 21 at time t.

Third transfer-function updating circuit 65 updates a third transfer function stored in third transfer-function memory circuit 64 on the basis of the output signal of third subtractor 61 and a signal stored in third memory circuit 62. For example, third transfer-function updating circuit 65 updates a third transfer function stored in third transfer-function memory circuit 64 through independent component analysis based on the output signal of third subtractor 61 and a signal stored in third memory circuit 62, as given by Expression 23 below, so that the output signal of third subtractor 61 and the signal stored in third memory circuit 62 become independent of each other.

[Expression 23]

$$H7(j)_{t+1} = H7(j)_t + \alpha7 \times \varphi7(e7_t) \times x7(t - j - \tau1)$$

Here, $H7(j)_{t+1}$ is the j-th third transfer function among N third transfer functions stored in third transfer-function memory circuit 64 at time t + 1 (i.e., after the update), $H7(j)_t$ is the j-th third transfer function among the N third transfer functions stored in third transfer-function memory circuit 64 at time t (i.e. before the update), $\alpha7$ is a seventh step-size parameter for controlling the learning speed for estimating the third transfer function of first howling 15a, and $\varphi7$ is a nonlinear function (e.g., a sigmoid function, a hyperbolic tangent function (tanh function), a normalized linear function, or a signum function (sign function)).

In this way, third transfer-function updating circuit 65 performs nonlinear processing using a nonlinear function on the output signal of third subtractor 61 and multiplies a resultant signal by the signal stored in third memory circuit 62 and the seventh step-size parameter for controlling the learning speed for estimating the third transfer function of first howling 15a so as to calculate a seventh update coefficient. Then, the calculated seventh update coefficient is added to the third transfer function stored in third transfer-function memory circuit 64 to update the third transfer function.

[2-1-2. Second Howling Canceller 70a]

Second howling canceller 70a is a circuit that, when second howling 16a refers to a phenomenon in which the voice output from second loudspeaker 24 comes back to and enters into second microphone 23, estimates a second howling signal indicating the degree of second howling 16a and removes the second howling signal from the output signal of second microphone 23. In the present embodiment, second howling canceller 70a is a circuit that removes the second howling signal from the output signal of second microphone 23 and outputs a resultant signal after the removal to first echo/first crosstalk canceller 80a, which will be described later. It is also a digital signal processing circuit that processes digital voice data in a time-base domain.

More specifically, second howling canceller 70a includes fourth transfer-function memory circuit 74, second delay unit 76, fourth memory circuit 72, fourth convolution arithmetic unit 73, fourth subtractor 71, and fourth transfer-function updating circuit 75. That is, second delay unit 76 is added to fourth echo canceller 70 illustrated in FIG. 2.

Fourth transfer-function memory circuit 74 stores fourth transfers function estimated as transfer functions of second howling 16a.

Second delay unit 76 delays the output signal of second howling canceller 70a.

Fourth memory circuit 72 stores signals output from second delay unit 76.

Fourth convolution arithmetic unit 73 generates a second howling signal by convolution of a signal stored in fourth memory circuit 72 and a fourth transfer function stored in fourth transfer-function memory circuit 74. For example, fourth convolution arithmetic unit 73 is an N-tap finite impulse response (FIR) filter that performs a convolution operation given by Expression 24 below.

[Expression 24]

$$y8'_t = \sum_{i=0}^{N-1} \{H8(i)_t \times x8(t - i - \tau2)\}$$

Here, y8't is the second howling signal at time t, N is the number of taps in the FIR filter, $H8(i)_t$ is the i-th fourth transfer function among N fourth transfer functions stored in fourth transfer-function memory circuit 74 at time t, $x8(t\text{-}i\text{-}\tau2)$ is the ($t\text{-}i\text{-}\tau2$)-th signal among the signals stored in fourth memory circuit 72, and $\tau2$ is the delay time caused by second delay unit 76.

Fourth subtractor 71 removes the second howling signal output from fourth convolution arithmetic unit 73 from the output signal of second microphone 23 and outputs a resultant signal as the output signal of second howling canceller 70a to first echo/first crosstalk canceller 80a. For example, fourth subtractor 71 performs a subtraction given by Expression 25 below.

[Expression 25]

$$e8_t = y8_t - y8'_t$$

Here, $e8_t$ is the output signal of fourth subtractor 71 at time t, and $y8_t$ is the output signal of second microphone 23 at time t.

Fourth transfer-function updating circuit 75 updates a fourth transfer function stored in fourth transfer-function memory circuit 74 on the basis of the output signal of fourth subtractor 71 and a signal stored in fourth memory circuit 72. For example, fourth transfer-function updating circuit 75 updates a fourth transfer function stored in fourth transfer-function memory circuit 74 through independent component analysis based on the output signal of fourth subtractor 71 and a signal stored in fourth memory circuit 72, as given by Expression 26 below, so that the output signal of fourth subtractor 71 and the signal stored in fourth memory circuit 72 become independent of each other.

[Expression 26]

$$H8(j)_{t+1} = H8(j)_t + \alpha8 \times \varphi8(e8_t) \times x8(t - j - \tau2)$$

Here, $H8(j)_{t+1}$ is the j-th fourth transfer function among N fourth transfer functions stored in fourth transfer-function memory circuit 74 at time t + 1 (i.e., after the update), $H8(j)_t$ is the j-th fourth transfer function among the N fourth transfer functions stored in fourth transfer-function memory circuit 74 at time t (i.e. before the update), $\alpha8$ is an eighth step-size parameter for controlling the learning speed for estimating the fourth transfer function of second howling 16a, and $\varphi8$ is a nonlinear function (e.g., a sigmoid function, a hyperbolic tangent function (tanh function), a normalized linear function, or a signum function (sign function)).

In this way, fourth transfer-function updating circuit 75 performs nonlinear processing using a nonlinear function on the output signal of fourth subtractor 71 and multiplies a resultant signal stored in fourth memory circuit 72 and the eighth step-size parameter for controlling the learning speed for estimating the fourth transfer function of second howling 16a so as to calculate an eighth update coefficient. Then, the calculated eighth update coefficient is added to the fourth transfer function stored in fourth transfer-function memory circuit 74 to update the fourth transfer function.

[2-1-3. First Echo/First Crosstalk Canceller 80a]

First echo/first crosstalk canceller 80a is a circuit that estimates a ninth interfering signal (i.e., first echo/first crosstalk signal) indicating the degree of first echo 13a and the degree of first crosstalk 17a from the output signal of second echo/second crosstalk canceller 90a and removes the ninth interfering signal from the output signal of second howling canceller 70a, first echo 13a being a phenomenon in which the voice output from first loudspeaker 22 circles around and enters into second microphone 23, and first crosstalk 17a being a phenomenon in which the voice of first speaker 11 enters into second microphone 23.

In the present embodiment, first echo/first crosstalk canceller 80a is a circuit that outputs a signal obtained by the removal of the ninth interfering signal to second voice recognition circuit 32, second echo/second crosstalk canceller 90a, and second loudspeaker 24. It is also a digital signal processing circuit that processes digital voice data in a time-base domain.

More specifically, first echo/first crosstalk canceller 80a includes fifth transfer-function memory circuit 84, fifth memory circuit 82, fifth convolution arithmetic unit 83, fifth subtractor 81, and fifth transfer-function updating circuit 85.

Fifth transfer-function memory circuit 84 stores fifth transfer functions estimated as transfer functions that combine first echo 13a and first crosstalk 17a.

Fifth memory circuit 82 stores the output signal of second echo/second crosstalk canceller 90a.

Fifth convolution arithmetic unit 83 generates the ninth interfering signal by convolution of a signal stored in fifth memory circuit 82 and a fifth transfer function stored in fifth transfer-function memory circuit 84. For example, fifth convolution arithmetic unit 83 is an N-tap FIR filter that performs a convolution operation given by Expression 27 below.

## [Expression 27]

$$y9'_t = \sum_{i=0}^{N-1} \{H9(i)_t \times x9(t-i)\}$$

Here, $y9'_t$ is the ninth interfering signal at time t, N is the number of taps in the FIR filter, $H9(i)_t$ is the i-th fifth transfer function among N fifth transfer functions stored in fifth transfer-function memory circuit 84 at time t, and $x9(t\text{-}i)$ is the $(t\text{-}i)$-th signal among the signals stored in fifth memory circuit 82.

Fifth subtractor 81 removes the ninth interfering signal output from fifth convolution arithmetic unit 83 from the output signal of second howling canceller 70a and outputs a resultant signal as the output signal of first echo/first crosstalk canceller 80a. For example, fifth subtractor 81 performs a subtraction given by Expression 28 below.

## [Expression 28]

$$e9_t = y9_t - y9'_t$$

Here, $e9_t$ is the output signal of fifth subtractor 81 at time t, and $y9_t$ is the output signal of second howling canceller 70a at time t.

Fifth transfer-function updating circuit 85 updates a fifth transfer function stored in fifth transfer-function memory circuit 84 on the basis of the output signal of fifth subtractor 81 and a signal stored in fifth memory circuit 82. For example, fifth transfer-function updating circuit 85 updates a fifth transfer function stored in fifth transfer-function memory circuit 84 through independent component analysis based on the output signal of fifth subtractor 81 and a signal stored in fifth memory circuit 82, as given by Expression 29 below, so that the output signal of fifth subtractor 81 and the signal stored in fifth memory circuit 82 become independent of each other.

## [Expression 29]

$$H9(j)_{t+1} = H9(j)_t + \alpha9 \times \varphi9(e9_t) \times x9(t-j)$$

Here, $H9(j)_{t+1}$ is the j-th fifth transfer function among N fifth transfer functions stored in fifth transfer-function memory circuit 84 at time t+1 (i.e., after the update), $H9(j)_t$ is the j-th fifth transfer function among the N fifth transfer functions stored in fifth transfer-function memory circuit 84 at time t (i.e. before the update), $\alpha9$ is a ninth step-size parameter for controlling the learning speed for estimating the fifth transfer function that combines first echo 13a and first crosstalk 17a, and $\varphi9$ is a nonlinear function (e.g., a sigmoid function, a hyperbolic tangent function (tanh function), a normalized linear function, or a signum function (sign function)).

In this way, fifth transfer-function updating circuit 85 performs nonlinear processing using a nonlinear function on the output signal of fifth subtractor 81 and multiplies a resultant signal by the signal stored in fifth memory circuit 82 and the ninth step-size parameter for controlling the learning speed for estimating the fifth transfer function that combines first echo 13a and first crosstalk 17a so as to calculate a fifth update coefficient. Then, the calculated fifth update coefficient is added to the fifth transfer function stored in fifth transfer-function memory circuit 84 to update the fifth transfer function.

Translation device 20 according to the present embodiment is designed such that, for the voice of first speaker 11 at one time, the time when the output signal of second echo/second crosstalk canceller 90a is input to first echo/first crosstalk canceller 80a is the same as or earlier than the time when the output of second howling canceller 70a is input to first echo/first crosstalk canceller 80a. That is, causality is defined so as to allow first echo/first crosstalk canceller 80a to cancel first crosstalk 17a. This can be appropriately implemented by taking into consideration factors that determine the time when the output signal of second echo/second crosstalk canceller 90a is input to first echo/first crosstalk canceller 80a (e.g., the rate of A/D conversion, the processing speed of first howling canceller 60a, the processing speed of second echo/second crosstalk canceller 90a) and factors that determine the time when the voice of first speaker 11 enters into second microphone 23 (e.g., a positional relationship between first speaker 11 and second microphone 23).

[2-1-4. Second Echo/Second Crosstalk Canceller 90a]

Second echo/second crosstalk canceller 90a is a circuit that estimates a tenth interfering signal (i.e., a second echo/second crosstalk signal) indicating the degree of second echo 14a and the degree of second crosstalk 18a from the output signal of first echo/first crosstalk canceller 80a and removes the tenth interfering signal from the output signal of first howling canceller 60a, second echo 14a being a phenomenon in which the voice output from second loudspeaker 24 circles around and enters into first microphone 21, and second crosstalk 18a being a phenomenon in which the voice of second speaker 12 enters into first microphone 21.

In the present embodiment, second echo/second crosstalk canceller 90a is a circuit that outputs a signal obtained by the removal of the first interfering signal to first voice recognition circuit 31, first echo/first crosstalk canceller 80a, and first loudspeaker 22. It is also a digital signal processing circuit that processes digital voice data in a time-base domain.

More specifically, second echo/second crosstalk canceller 90a includes sixth transfer-function memory circuit 94, sixth memory circuit 92, sixth convolution arithmetic unit 93, sixth subtractor 91, and sixth transfer-function updating circuit 95.

Sixth transfer-function memory circuit 94 stores sixth transfer functions estimated as transfer functions that combine second echo 14a and second crosstalk 18a.

Sixth memory circuit 92 stores the output signal of first echo/first crosstalk canceller 80a.

Sixth convolution arithmetic unit 93 generates the tenth interfering signal by convolution of a signal stored in sixth memory circuit 92 and a sixth transfer function stored in sixth transfer-function memory circuit 94. For example, sixth convolution arithmetic unit 93 is an N-tap FIR filter that performs a convolution operation given by Expression 30 below.

[Expression 30]

$$y10'_t = \sum_{i=0}^{N-1} \{H10(i)_t \times x10(t-i)\}$$

Here, $y10'_t$ is the tenth interfering signal at time t, N is the number of taps in the FIR filter, $H10(i)_t$ is the i-th sixth transfer function among N sixth transfer functions stored in sixth transfer-function memory circuit 94 at time t, and $\times x10(t\text{-}i)$ is the (t-i)-th signal among the signals stored in sixth memory circuit 92.

Sixth subtractor 91 removes the tenth interfering signal output from sixth convolution arithmetic unit 93 from the output signal of first howling canceller 60a and outputs a resultant signal as the output signal of second echo/second crosstalk canceller 90a. For example, sixth subtractor 91 performs a subtraction given by Expression 31 below.

[Expression 31]

$$e10_t = y10_t - y10'_t$$

Here, $e10_t$ is the output signal of sixth subtractor 91 at time t, and $y10_t$ is the output signal of first howling canceller 60a at time t.

Sixth transfer-function updating circuit 95 updates a sixth transfer function stored in sixth transfer-function memory circuit 94 on the basis of the output signal of sixth subtractor 91 and a signal stored in sixth memory circuit 92. For example, sixth transfer-function updating circuit 95 updates a sixth transfer function stored in sixth transfer-function memory circuit 94 through independent component analysis based on the output signal of sixth subtractor 91 and a signal stored in sixth memory circuit 92, as given by Expression 32 below, so that the output signal of sixth subtractor 91 and the signal stored in sixth memory circuit 92 become independent of each other.

[Expression 32]

$$H10(j)_{t+1} = H10(j)_t + \alpha 10 \times \varphi 10(e10_t) \times x10(t - j)$$

Here, $H10(j)_{t+1}$ is the j-th sixth transfer function among N sixth transfer functions stored in sixth transfer-function memory circuit 94 at time t + 1 (i.e., after the update), $H10(j)_t$ is the j-th sixth transfer function among the N sixth transfer functions stored in sixth transfer-function memory circuit 94 at time t (i.e. before the update), $\alpha 10$ is a step-size parameter for controlling the learning speed for estimating the sixth transfer function that combines second echo 14a and second crosstalk 18a, and $\varphi 10$ is a nonlinear function (e.g., a sigmoid function, a hyperbolic tangent function (tanh function), a normalized linear function, or a signum function (sign function)).

In this way, sixth transfer-function updating circuit 95 performs nonlinear processing using a nonlinear function on the output signal of sixth subtractor 91 and multiplies a resultant signal by the signal stored in sixth memory circuit 92 and a tenth step-size parameter for controlling the learning speed for estimating the sixth transfer function that combines second echo 14a and second crosstalk 18a so as to calculate a sixth update coefficient. Then, the calculated fifth update coefficient is added to the sixth transfer function stored in sixth transfer-function memory circuit 94 to update the sixth transfer function.

Translation device 20 according to the present embodiment is designed such that, for the voice of second speaker 12 at one time, the time when the output signal of first echo/first crosstalk canceller 80a is input to second echo/second crosstalk canceller 90a is the same as or earlier than the time when the output of first howling canceller 60a is input to second echo/second crosstalk canceller 90a. That is, causality is defined so as to allow second echo/second crosstalk canceller 90a to cancel second crosstalk 18a. This can be appropriately implemented by taking into consideration factors that determine the time when the output signal of first echo/first crosstalk canceller 80a is input to second echo/second crosstalk canceller 90a (e.g., the rate of A/D conversion, the processing speed of second howling canceller 70a, the processing speed of first echo/first crosstalk canceller 80a) and factors that determine the time when the voice of second speaker 12 enters into first microphone 21 (e.g., a positional relationship between second speaker 12 and first microphone 21).

[2-2. Operations]

Translation device 20a configured as described above according to the present embodiment operates as follows. The following description focuses on differences from translation device 20 described in Embodiment 1.

First, operations of control circuit 37 will be described.

First language selection circuit 27 and second language selection circuit 28 respectively receive a selection of the first language used by first speaker 11 from first speaker 11 and a selection of the second language used by second speaker 12 from second speaker 12 and notify control circuit 37 of the selections in advance. As described thus far, the first language and the second language according to Embodiment 2 are the same language.

Since notified of the fact that the first language and the second language are the same language from first language selection circuit 27 and second language selection circuit 28, control circuit 37 deactivates first echo canceller 40, second echo canceller 50, first translation circuit 33, second translation circuit 34, first voice synthesis circuit 35, and second voice synthesis circuit 36.

Next, voices will be described.

The voice of first speaker 11 enters into first microphone 21. In addition to the voice of first speaker 11, first howling 15a, second echo 14a, and second crosstalk 18a also enter into first microphone 21. First howling canceller 60a removes the first howling signal from the output signal of first microphone 21. The first howling signal is a signal indicating (estimating) the degree of first howling 15a. Thus, the output signal of first howling canceller 60a is the signal obtained by removing the influence of first howling 15a from the output signal of first microphone 21.

Then, second echo/second crosstalk canceller 90a removes the ninth interfering signal from the output signal of first howling canceller 60a. The ninth interfering signal (i.e., second echo/second crosstalk signal) is a signal indicating (estimating) the degree of second echo 14a and second crosstalk 18a. Thus, the output signal of second echo/second crosstalk canceller 90a is the signal obtained by removing the influences of second echo 14a and second crosstalk 18a from the output signal of first howling canceller 60a, and is output to first voice recognition circuit 31, first echo/first crosstalk canceller 80a, and first loudspeaker 22.

Then, first voice recognition circuit 31 receives input of digital voice data obtained as a result of removing first howling 15a from the voice of first speaker 11 via first howling canceller 60a and removing second echo 14a and second crosstalk 18a from a resultant voice via second echo/second crosstalk canceller 90a. In response to the input digital voice data, first voice recognition circuit 31 outputs a first character string as a result of voice recognition to control circuit 37.

The signal input to first loudspeaker 22 is output as a voice.

Similarly, the voice of second speaker 12 enters into second microphone 23. In addition to the voice of second speaker 12, second howling 16a, first echo 13a, and first crosstalk 17a also enter into second microphone 23. Second howling canceller 70a removes the second howling signal from the output signal of second microphone 23. The second howling signal is a signal indicating (estimating) the degree of second howling 16a. Thus, the output signal of second howling canceller 70a is the signal obtained by removing the influence of second howling 16a from the output signal of second microphone 23.

Then, first echo/first crosstalk canceller 80a removes the tenth interfering signal from the output signal of second howling canceller 70a. The tenth interfering signal (i.e., first echo/first crosstalk signal) is a signal indicating (estimating) the degree of first echo 13a and the degree of first crosstalk 17a. Thus, the output signal of first echo/first crosstalk canceller 80a is the signal obtained by removing the influences of first echo 13a and first crosstalk 17a from the output signal of second howling canceller 70a, and is output to second voice recognition circuit 32, second echo/second crosstalk canceller 90a, and second loudspeaker 24.

Then, second voice recognition circuit 32 receives input of digital voice data obtained as a result of removing second howling 16a from the voice of second speaker 12 via second howling canceller 70a and removing first echo 13a and first crosstalk 17a from a resultant voice via first echo/first crosstalk canceller 80a. In response to the input digital voice data, second voice recognition circuit 32 outputs a second character string as a result of voice recognition to control circuit 37.

The signal input to second loudspeaker 24 is output as a voice.

Control circuit 37 outputs a first character string in the first language and a second character string in the second language to image-signal generation circuit 38, the first character string being output as a result of recognizing the voice of first speaker 11 from first voice recognition circuit 31, and the second character string being output as a result of recognizing the voice of second speaker 12 from second voice recognition circuit 32.

Image-signal generation circuit 38 outputs the first character string in the first language and the second character string in the second language to first display circuit 25 and second display circuit 26, the first character string being output as a result of recognizing the voice of first speaker 11 from first voice recognition circuit 31, and the second character string being output as a result of recognizing the voice of second speaker 12 from second voice recognition circuit 32.

Translation device 20a processes the voices of first and second speakers 11 and 12 as described above.

According to the above, the output signal input to be input to first voice recognition circuit 31 is only the output signal obtained by removing the influences of first howling 15a, second echo 14a, and second crosstalk 18a from the voice that has entered into first microphone 21, i.e., only the voice of first speaker 11 with acoustic noise removed therefrom. Moreover, the voice to be output from first loudspeaker 22 is only the output signal obtained by removing the influences of first howling 15a, second echo 14a, and second crosstalk 18a from the voice that has entered into first microphone 21, i.e., only the voice of first speaker 11 with acoustic noise removed therefrom.

The output signal to be input to second voice recognition circuit 32 is only the output signal obtained by removing the influences of second howling 16a, first echo 13a, and first crosstalk 17a from the voice that has entered into second microphone 23, i.e., only the voice of second speaker 12 with acoustic noise removed therefrom. Moreover, the voice to be output from second loudspeaker 24 is only the output signal obtained by removing the influences of second howling 16a, first echo 13a, and first crosstalk 17a from the voice that has entered into second microphone 23, i.e., only the voice of second speaker 12 with acoustic noise removed therefrom.

[2-3. Advantageous Effects]

As described above, translation device 20 includes control circuit 37 that deactivates first echo canceller 40, second echo canceller 50, first translation circuit 33, second translation circuit 34, first voice synthesis circuit 35, and second voice synthesis circuit 36 when the first language received by first language selection circuit 27 and the second language received by second language selection circuit 28 are the same language.

When the first language and the second language are the same language, translation device 20a as described above can improve the processing speed by deactivating first echo canceller 40, second echo canceller 50, first translation circuit 33, second translation circuit 34, first voice synthesis circuit 35, and second voice synthesis circuit 36. Besides, the translation device is in no need of translation, but is capable of amplifying the sound levels of voices. Therefore, the translation device can assist conversations between two speakers even if first speaker 11 and second speaker 12 are away from each there or even in a noisy environment.

[Embodiment 3]

Embodiment 2 has described the case where the first language of first speaker 11 the second language of second speaker 12 are the same language and sound-level amplification is necessary. On the other hand, Embodiment 3 describes a configuration suitable for use in the case where the first language of first speaker 11 and the second language of second speaker 12 are the same language and sound-level amplification is unnecessary.

Embodiment 3 differs from Embodiment 1 in that the echo cancellers, the translation function, the function of outputting translated voices, and the function of amplifying the sound levels of voices are unnecessary.

[3-1. Configuration]

FIG. 6 is a block diagram illustrating a configuration of translation device 20b according to Embodiment 3. In Embodiment 3, constituent elements that are common to those according to Embodiment 1 are given the same reference signs, and detailed description thereof shall be omitted.

Translation device 20b according to Embodiment 3 differs from the translation device according to Embodiment 1 in that, because the first language of first speaker 11 and the second language of second speaker 12 are the same language and sound-level amplification is unnecessary, first translation circuit 33, second translation circuit 34, first voice synthesis circuit 35, second voice synthesis circuit 36, first loudspeaker 22, and second loudspeaker 24 become unnecessary. Moreover, due to the unnecessity of first and second loudspeakers 22 and 24, first echo canceller 40, second echo canceller 50, third echo canceller 60, and fourth echo canceller 70 also become unnecessary because first echo 13, second echo 14, third echo 15, and fourth echo 16 are not generated.

On the other hand, first display circuit 25 and second display circuit 26 are necessary in order to display the words of first speaker 11 and second speaker 12 as character strings. Moreover, crosstalk occurs due to first microphone 21 and second microphone 23 included in translation device 20b, crosstalk occurs, the crosstalk being a phenomenon in which the voice of one speaker enters into microphones for receiving input of voices of speakers other than the former speaker. Thus, the function of cancelling crosstalk is necessary.

[3-2. Operations]

Translation device 20b configured as described above according to the present embodiment operates as follows. The following description focuses on differences from translation device 20 described in Embodiment 1.

First, operations of control circuit 37 will be described.

First language selection circuit 27 and second language selection circuit 28 respectively receive a selection of the first language used by first speaker 11 from first speaker 11 and a selection of the second language used by second speaker 12 from second speaker 12 and notify control circuit 37 of the selections in advance. As described previously, the first language and the second language are the same language in Embodiment 3. Since sound-level amplification is unnecessary, control circuit 37 deactivates first translation circuit 33, second translation circuit 34, first voice synthesis circuit 35, second voice synthesis circuit 36, first loudspeaker 22, second loudspeaker 24, first echo canceller 40, second echo canceller 50, third echo canceller 60, and fourth echo canceller 70.

Next, voices will be described.

The voice of first speaker 11 enters into first microphone 21. In addition to the voice of first speaker 11, second crosstalk 18 also enters into first microphone 21. Second crosstalk canceller 90 removes the sixth interfering signal (i.e., second crosstalk signal) from the output signal of first microphone 21. The sixth interfering signal is a signal indicating (estimating) the degree of second crosstalk 18. Thus, the output signal of second crosstalk canceller 90 is the signal obtained by removing the influence of second crosstalk 18 from the output signal of first microphone 21, and is output to first voice recognition circuit 31 and first crosstalk canceller 80.

Then, first voice recognition circuit 31 receives input of digital voice data obtained as a result of removing second crosstalk 18 from the voice of first speaker 11 via second crosstalk canceller 90. In response to the input digital voice data, first voice recognition circuit 31 outputs the first character string as a result of voice recognition to control circuit 37.

Similarly, the voice of second speaker 12 enters into second microphone 23. In addition to the voice of second speaker 12, first crosstalk 17 also enters into second microphone 23. First crosstalk canceller 80 removes the fifth interfering signal (i.e., first crosstalk signal) from the output signal of second microphone 23. The fifth interfering signal is a signal indicating (estimating) the degree of first crosstalk 17. Thus, the output signal of first crosstalk canceller 80 is the signal obtained by removing the influence of first crosstalk 17 from the output signal of second microphone 23, and is output to second voice recognition circuit 32 and second crosstalk canceller 90.

Then, second voice recognition circuit 32 receives input of digital voice data obtained as a result of removing first crosstalk 17 from the voice of second speaker 12 via first crosstalk canceller 80. In response to the input digital voice data, second voice recognition circuit 32 outputs the second character string as a result of voice recognition to control circuit 37.

Control circuit 37 outputs the first character string in the first language and the second character string in the second language to image-signal generation circuit 38, the first character string being output as a result of recognizing the voice of first speaker 11 from first voice recognition circuit 31, and the second character string being output as a result of recognizing the voice of second speaker 12 from second voice recognition circuit 32.

Image-signal generation circuit 38 outputs the first character string in the first language and the second character string in the second language to first display circuit 25 and second display circuit 26, the first character string being output as a result of recognizing the voice of first speaker 11 from first voice recognition circuit 31, and the second character string being output as a result of voice recognition of second speaker 12 from second voice recognition circuit 32.

Translation device 20b processes the voices of first and second speakers 11 and 12 as described above.

According to the above, the output signal to be input to first voice recognition circuit 31 is only the output signal obtained by removing the influence of second crosstalk 18 from the voice that has entered into first microphone 21, i.e., only the voice of first speaker 11 with acoustic noise removed therefrom. The output signal to be input to second voice recognition circuit 32 is only the output signal obtained by removing the influence of first crosstalk 17 from the voice that has entered into second microphone 23, i.e., only the voice of second speaker 12 with acoustic noise removed therefrom.

[3-3. Advantageous Effects]

When the first language and the second language are the same language and sound-level amplification is unnecessary, translation device 20b as described above can increase the processing speed by deactivating first echo canceller 40, second echo canceller 50, third echo canceller 60, fourth echo canceller 70, first translation circuit 33, second translation circuit 34, first voice synthesis circuit 35 second voice synthesis circuit 36, first loudspeaker 22, and second loudspeaker 24.

[4-1. Selection of Configuration]

Embodiments 1 to 3 have thus far described configurations that are determined to be selected depending on whether or not translation is necessary and whether or not sound-level amplification is necessary.

FIG. 7 is a flowchart for selecting an optimum configuration via control circuit 37 from Embodiments 1 to 3.

First, first language selection circuit 27 receives a selection of the first language used by first speaker 11 from first speaker 11 (step S300). First language selection circuit 27 further notifies control circuit 37 of the received first language.

Second language selection circuit 28 receives a selection of the second language used by second speaker 12 from second speaker 12 (step S301). Second language selection circuit 28 further notifies control circuit 37 of the received second language.

Control circuit 37 determines whether the first language received by first language selection circuit 27 and the second language received by second language selection circuit 28 are the same language (step S302).

If the first language received by first language selection circuit 27 and the second language received by second language selection circuit 28 are different languages (NO in step S302), control circuit 37 runs the functions of each constituent element so as to set up the configuration according to Embodiment 1 (step S303).

If the first language received by first language selection circuit 27 and the second language received by second language selection circuit 28 are the same language (YES in step S302), control circuit 37 determines whether or not sound-level amplification is necessary (step S304).

If sound-level amplification is necessary (YES in step S304), control circuit 37 runs the function of each constituent element so as to set up the configuration according to Embodiment 2 (step S305).

If sound-level amplification is unnecessary (NO in step S304), control circuit 37 runs the function of each constituent element so as to set up the configuration according to Embodiment 3 (step S306).

The determination in S304 as to whether or not sound-level amplification is necessary may be made by control circuit 37, or may be made by either first speaker 11 or second speaker 12. If the determination is made by first speaker 11 or second speaker 12, a switch for setting the necessity and unnecessity of sound-level amplification may be provided in the vicinity of one of first language selection circuit 27, second language selection circuit 28, first display circuit 25, and second display circuit 26.

[Embodiment 4]

In Embodiment 1, first language selection circuit 27 and second language selection circuit 28 select the languages used by first speaker 11 and second speaker 12. On the other hand, Embodiment 4 describes a new configuration in which the translation device additionally has the function of identifying the languages used by first and second speakers 11 and 12 by the voices of first and second speakers 11 and 12.

[5-1. Configuration]

FIG. 8 is a block diagram illustrating a configuration of translation device 20c according to Embodiment 4. In Embodiment 4, constituent elements that are common to those according to Embodiment 1 are given the same reference signs, and detailed descriptions thereof shall be omitted.

Translation device 20c according to Embodiment 4 includes first language identification circuit 311 and second language identification circuit 321 in addition to the configuration according to Embodiment 1. Alternatively, the translation device may not include first language selection circuit 27 and second language selection circuit 28.

First language identification circuit 311 identifies the first language by the first voice and notifies control circuit 37 of the result. That is, the first language used by first speaker 11 is identified by the first voice of first speaker 11. For example, first voice recognition circuit 31 recognizes the first voice of first speaker 11 and outputs the first character string also to first language identification circuit 311.

Second-language identification circuit 321 identifies the second language by the second voice and notifies control circuit 37 of the result. That is, the second language used by second speaker 12 is identified by the second voice of second speaker 12. For example, second voice recognition circuit 32 recognizes the second voice of second speaker 12 and outputs the second character string also to second language identification circuit 321.

On the basis of the first language identified by first language identification circuit 311 and the second language identified by second language identification circuit 321, control circuit 37 may cause first voice recognition circuit 31 to recognize voices in the first language, cause second voice recognition circuit 32 to recognize voices in the second language, cause first translation circuit 33 to translate the first language into the second language, cause second translation circuit 34 to translate the second language into the first language, cause first voice synthesis circuit 35 to synthesize voices in the second language, and cause second voice synthesis circuit 36 to synthesize voices in the first language.

[5-2. Operations]

Translation device 20c configured as described above according to the present embodiment operates as follows. The following description focuses on differences from translation device 20 described in Embodiment 1.

As described previously, translation device 20c according to Embodiment 4 differs from translation device 20 according to Embodiment 1 in that first language selection circuit 27 and second language selection circuit 28 are omitted, and first language identification circuit 311 and second language identification circuit 321 are additionally provided.

Thus, languages will not be selected in advance using first language selection circuit 27 and second language selection circuit 28.

The voice of first speaker 11 enters into first microphone 21. In addition to the voice of first speaker 11, the same acoustic noise as that in Embodiment 1 enters into first microphone 21. The processing until the output signal of first microphone 21 reaches first voice recognition circuit 31 and first crosstalk canceller 80 is the same as the processing described in Embodiment 1. As a result, the digital voice data to be input to first voice recognition circuit 31 and first crosstalk canceller 80 is the same as the digital voice data described in Embodiment 1. That is, first voice recognition circuit 31 and first crosstalk canceller 80 receive input of the digital voice data obtained as a result of removing second echo 14 from the voice of first speaker 11 via second echo canceller 50, removing third echo 15 from a resultant voice via third echo canceller 60, and removing second crosstalk 18 from resultant voice via second crosstalk canceller 90. First voice recognition circuit 31 notifies first language identification circuit 311 of the input digital voice data.

The voice of second speaker 12 enters into second microphone 23. In addition to the voice of second speaker 12, the same acoustic noise as that in Embodiment 1 enters into second microphone 23. The processing until the output signal of second microphone 23 reaches second voice recognition circuit 32 and second crosstalk canceller 90 is the same as the processing described in Embodiment 1. As a result, the digital voice data to be input to second voice recognition circuit 32 and second crosstalk canceller 90 is the same as the digital voice data described in Embodiment 1. That is, second voice recognition circuit 32 and second crosstalk canceller 90 receive input of the digital voice data obtained as a result of removing first echo 13 from the voice of second speaker 12 via first echo canceller 40, removing fourth echo 16 from a resultant voice via fourth echo canceller 70, and removing first crosstalk 17 from a resultant voice via first crosstalk canceller 80. Second voice recognition circuit 32 notifies second language identification circuit 321 of the input digital voice data.

Then, first language identification circuit 311 identifies the first language on the basis of the input digital voice data and notifies control circuit 37 of the result.

Second language identification circuit 321 identifies the second language on the basis of the input digital voice data and notifies control circuit 37 of the result.

Then, control circuit 37 indicates the first language notified from first language identification circuit 311 to first voice recognition circuit 31, first translation circuit 33, second translation circuit 34, and first voice synthesis circuit 35, and indicates the second language notified from second language identification circuit 321 to second voice recognition circuit 32, first translation circuit 33, second translation circuit 34, and second voice synthesis circuit 36.

Then, in response to the input digital voice data, first voice recognition circuit 31 outputs the first character string as a result of voice recognition to first translation circuit 33 and control circuit 37 on the basis of information on the first language of first speaker 11 indicated by control circuit 37.

Moreover, in response to the input digital voice data, second voice recognition circuit 32 outputs the second character string as a result of voice recognition to second translation circuit 34 and control circuit 37 on the basis of information on the second language of second speaker 12 indicated by control circuit 37.

Then, first translation circuit 33 converts the first character string in the first language of first speaker 11 indicated by control circuit 37 and output from first voice recognition circuit 31 into the third character string in the second language of second speaker 12, and outputs the third character string to first voice synthesis circuit 35 and control circuit 37.

Moreover, second translation circuit 34 converts the second character string in the second language of second speaker 12 indicated by control circuit 37 and output from second voice recognition circuit 32 into the fourth character string in the first language of first speaker 11, and outputs the fourth character string to second voice synthesis circuit 36 and control circuit 37.

At this time, the character strings received by first voice synthesis circuit 35, second voice synthesis circuit 36, and control circuit 37 are the same as the character strings described in Embodiment 1, and therefore the following processing procedure is the same as the procedure described in Embodiment 1.

[5-3. Advantageous Effects]

As described above, translation device 20c further includes first language identification circuit 311 that identifies the first language by the first voice and notifies control circuit 37 of the result, and second language identification circuit 321 that identifies the second language by the second voice and notifies control circuit 37 of the result. On the basis of the first language identified by first language identification circuit 311 and the second language identified by second language identification circuit 321, control circuit 37 causes first voice recognition circuit 31 to recognize voices in the first language, causes second voice recognition circuit 32 to recognize voices in the second language, causes first translation circuit 33 to translate the first language into the second language, causes second translation circuit 34 to translate the second language into the first language, causes first voice synthesis circuit 35 to synthesize voices in the second language, and causes second voice synthesis circuit 36 to synthesize voices in the first language.

Translation device 20c as described above eliminates the need for speakers to use language selection circuits and makes translation simpler.

[Embodiment 5]

Embodiment 2 has described a configuration suitable for use in the case where first and second speakers 11 and 12 select languages to be used, and the first language of first speaker 11 and the second language of second speaker 12 are the same language. Embodiment 4 has described a configuration in which the translation device additionally has the function of identifying the languages used by first and second speakers 11 and 12 by the voices of first and second speakers 11 and 12.

In view of this, Embodiment 5 describes a configuration suitable for use in the case where, in the configuration according to Embodiment 4, the first language of first speaker 11 and the second language of second speaker 12 are the same language as in Embodiment 2.

[6-1. Configuration]

FIG. 9 is a block diagram illustrating a configuration of translation device 20d according to Embodiment 5. In Embodiment 5, constituent elements that are common to those of Embodiments 2 and 4 are given the same reference signs, and detailed descriptions thereof shall get omitted.

Translation device 20d according to Embodiment 5 further includes first language identification circuit 311 and second language identification circuit 321 described in Embodiment 4, in addition to the configuration according to Embodiment 2.

Moreover, control circuit 37 may deactivate first echo canceller 40, second echo canceller 50, first translation circuit 33, second translation circuit 34, first voice synthesis circuit 35, and second voice synthesis circuit 36.

[6-2. Operations]

Translation device 20d configured as described above according to the present embodiment operates as follows. The following description focuses on differences from translation device 20a described in Embodiment 2.

As described thus far, translation device 20d according to Embodiment 5 differs from translation device 20a according to Embodiment 2 in that first language selection circuit 27 and second language selection circuit 28 are omitted, and first language identification circuit 311 and second language identification circuit 321 are additionally provided.

Thus, languages will not be selected in advance using first language selection circuit 27 and second language selection circuit 28.

First, operations of control circuit 37 will be described.

Embodiment 5 described herein is suitable for use in the case where the first language of first speaker 11 and the second language of second speaker 12 are the same language in [5-2. Operations] described in Embodiment 4. In the configuration according to Embodiment 4, control circuit 37 is notified of the fact that the first language and the second language are the same language from first language identification circuit 311 and second language identification circuit 321. Thus, control circuit 37 according to Embodiment 5 deactivates first echo canceller 40, second echo canceller 50, first translation circuit 33, second translation circuit 34, first voice synthesis circuit 35, and second voice synthesis circuit 36.

Next, voices will be described.

The voice of first speaker 11 enters into first microphone 21. In addition to the voice of first speaker 11, the same acoustic noise as that in Embodiment 2 also enters into first microphone 21. The processing until the output signal of first microphone 21 reaches first voice recognition circuit 31, first loudspeaker 22, and first echo/first crosstalk canceller 80a is the same as the processing described in Embodiment 2. As a result, the digital voice data to be input to first voice recognition circuit 31, first loudspeaker 22, and first echo/first crosstalk canceller 80a is the same as the digital voice data described in Embodiment 2. That is, first voice recognition circuit 31, first loudspeaker 22, and first echo/first crosstalk canceller 80a receive input of the digital voice data obtained as a result of removing first howling 15a from the voice of first speaker 11 via first howling canceller 60a and removing second echo 14a and second crosstalk 18a from a resultant voice via second echo/second crosstalk canceller 90a.

In response to the input digital voice data, first voice recognition circuit 31 outputs the first character string as a result of voice recognition to control circuit 37 and first language identification circuit 311.

Then, first language identification circuit 311 identifies the first language by the input digital voice data and notifies control circuit 37 of the result.

The voice of second speaker 12 enters into second microphone 23. In addition to the voice of second speaker 12, the same acoustic noise as that in Embodiment 2 also enters second microphone 23. The processing until the output signal of second microphone 23 reaches second voice recognition circuit 32, second loudspeaker 24, and second echo/second crosstalk canceller 90a is the same as the processing described in Embodiment 2. As a result, the digital voice data to be input to second voice recognition circuit 32, second loudspeaker 24, and second echo/second crosstalk canceller 90a is the same as the digital voice data described in Embodiment 2. That is, second voice recognition circuit 32, second loudspeaker 24, and second echo/second crosstalk canceller 90a receive input of the digital voice data obtained as a result of removing second howling 16a from the voice of second speaker 12 via second howling canceller 70a and removing first echo 13a and first crosstalk 17a from a resultant voice via first echo/first crosstalk canceller 80a.

In response to the input digital voice data, second voice recognition circuit 32 outputs the second character string as a result of voice recognition to control circuit 37 and second language identification circuit 321.

Moreover, second language identification circuit 321 identifies the second language by the input digital voice data and notifies control circuit 37 of the result.

As described thus far, the first language and the second language are the same language in Embodiment 5. That is, the translation function and the function of outputting translated voices become unnecessary.

At this time, the signals received by first loudspeaker 22, second loudspeaker 24, control circuit 37, first echo/first crosstalk canceller 80a, and second echo/second crosstalk canceller 90a are the same as the signals described in Embodiment 2, and therefore the following processing procedure is the same as the procedure described in Embodiment 2.

[6-3. Advantageous Effects]

As described above, translation device 20d includes control circuit 37 that deactivates first echo canceller 40, second echo canceller 50, first translation circuit 33, second translation circuit 34, first voice synthesis circuit 35, and second voice synthesis circuit 36 when the first language identified by first language identification circuit 311 and the second language identified by second language identification circuit 321 are the same languages.

Translation device 20d as described above eliminates the need for speakers to use language selection circuits and makes translation simpler. Moreover, when the first language and the second language are the same language, the translation device can increase the processing speed by deactivating first echo canceller 40, second echo canceller 50, first translation circuit 33, second translation circuit 34, first voice synthesis circuit 35, and second voice synthesis circuit 36.

[Embodiment 6]

Embodiment 3 has described a configuration suitable for use in the case where languages to be used by first and second speakers 11 and 12 are selected, the first language of first speaker 11 and the second language of second speaker 12 are the same language, and sound-level amplification is unnecessary. Moreover, Embodiment 4 has described a configuration in which the translation device additionally has the function of identifying languages used by first and second speakers 11 and 12 by the voices of first and second speakers 11 and 12.

In view of this, Embodiment 6 describes a configuration suitable for use in the case where, in the configuration according to Embodiment 4, the first language of first speaker 11 and the second language of second speaker 12 are the same and sound-level amplification is unnecessary as in Embodiment 3.

[7-1. Configuration]

FIG. 10 is a block diagram illustrating a configuration of translation device 20e according to Embodiment 6. In Embodiment 6, constituent elements that are common to those in Embodiments 3 and 4 are given the same reference signs, and detailed descriptions thereof shall be omitted.

Translation device 20e according to Embodiment 6 further include first language identification circuit 311 and second language identification circuit 321 described in Embodiment 4 in addition to the configuration described in Embodiment 3.

[7-2. Operations]

Translation device 20e configured as described above according to the present embodiment operates as follows. The following description focuses on differences from translation device 20b described in Embodiment 3.

As described thus far, translation device 20e according to Embodiment 6 differs from translation device 20b according to Embodiment 3 in that first language selection circuit 27 and second language selection circuit 28 are omitted, and first language identification circuit 311 and second language identification circuit 321 are additionally provided.

Thus, languages will not be selected in advance using first language selection circuit 27 and second language selection circuit 28.

First, operations of control circuit 37 will be described.

Embodiment 6 is applied to the case where the first language of first speaker 11 and the second language of second speaker 12 are the same language and sound-level amplification is unnecessary in [5-2. Operations] described in Embodiment 4. In the configuration described in Embodiment 4, control circuit 37 is notified of the fact that the first language and the second language are the same language from first language identification circuit 311 and second language identification circuit 321. Thus, control circuit 37 according to Embodiment 6 deactivates first translation circuit 33, second translation circuit 34, first voice synthesis circuit 35, second voice synthesis circuit 36, first loudspeaker 22, second loudspeaker 24, first echo canceller 40, second echo canceller 50, third echo canceller 60, and fourth echo canceller 70.

Next, voices will be described.

The voice of first speaker 11 enters into first microphone 21. In addition to the voice of first speaker 11, the same acoustic noise as that in Embodiment 3 also enters into first microphone 21. The processing until the output signal of first microphone 21 reaches first voice recognition circuit 31 and first crosstalk canceller 80 is the same as the processing described in Embodiment 3. As a result, digital voice data to be input to first voice recognition circuit 31 and first crosstalk canceller 80 is the same as the digital voice data described in Embodiment 3. That is, first voice recognition circuit 31 and first crosstalk canceller 80 receives input of the digital voice data obtained as a result of removing second crosstalk 18 from the voice of first speaker 11 via second crosstalk canceller 90. In response to the input digital voice data, first voice recognition circuit 31 outputs the first character string as a result of voice recognition to control circuit 37, first language identification circuit 311, and image-signal generation circuit 38.

Then, first language identification circuit 311 identifies the first language on the basis of the input digital voice data and notifies control circuit 37 of the result.

The voice of second speaker 12 enters into second microphone 23. In addition to the voice of second speaker 12, the same acoustic noise as that in Embodiment 3 also enters into second microphone 23. The processing until the output signal of second microphone 23 reaches second voice recognition circuit 32 and second crosstalk canceller 90 is the same as the processing described in Embodiment 3. As a result, digital voice data to be input to second voice recognition circuit 32 and second crosstalk canceller 90 is the same as the digital voice data described in Embodiment 2. That is, second voice recognition circuit 32 and second crosstalk canceller 90 receive input of the digital voice data obtained as a result of removing first crosstalk 17 from the voice of second speaker 12 via first crosstalk canceller 80. In response to the input digital voice data, second voice recognition circuit 32 outputs the second character string as a result of voice recognition to control circuit 37, second language identification circuit 321, and image-signal generation circuit 38.

Moreover, second language identification circuit 321 identifies the second language on the basis of the input digital voice data and notifies control circuit 37 of the result.

At this time, the signals received by control circuit 37, image-signal generation circuit 38, first crosstalk canceller 80, and second crosstalk canceller 90 are the same as the signals described in Embodiment 3, and therefore the following processing procedure is the same as the procedure described in Embodiment 3.

[7-3. Advantageous Effects]

Translation device 20e as described above eliminates the need for speakers to use language selection circuits and makes translation simpler. When the first language and the second language are the same language and sound-level amplification is unnecessary, the translation device can increase the processing speed by deactivating first echo canceller 40, second echo canceller 50, third echo canceller 60, fourth echo canceller 70, first translation circuit 33, second translation circuit 34, first voice synthesis circuit 35, second voice synthesis circuit 36, first loudspeaker 22, and second loudspeaker 24.

[Other Embodiments]

As described above, Embodiments 1 to 6 are described by way of example of the technique disclosed in the present application. The technique of the present disclosure is, however, not limited to these embodiments and is also applicable to other embodiments obtained by appropriate modifications, replacements, addition, and omission. New embodiments may also be derived from any combination of constituent elements described above in Embodiments 1 to 6.

Control circuit 37 described above may perform control such that the output of first voice synthesis circuit 35 and the output of second voice synthesis circuit 36 do not overlap in terms of time. By so doing, it is possible to increase the accuracy of all echo cancellers in removing unnecessary signals and to improve ease of speaking and hearing for both speakers. Alternatively, control circuit 37 may give higher priority to the output of the synthesized voice of one speaker. For example, higher priority may be given to the output of the synthesized voice of a customer such as first speaker 11 illustrated in FIG. 1.

In the above description, Embodiments 5 and 6 are applied after the first language of first speaker 11 and the second language of second speaker 12 have been identified as being the same in Embodiment 4, but the present disclosure is not limited to this example. For example, one example of a method is described in which a translation device including first language identification circuit 311 and second language identification circuit 321 described in Embodiments 4 to 6 determines languages to be translated. First, first speaker 11 and second speaker 12 greet each other in their native languages before talking to a main subject that requires translation. In that case, first language identification circuit 311 and second language identification circuit 321 identify languages and notify control circuit 37 of the languages. Then, control circuit 37 instructs first translation circuit 33 and second translation circuit 34 to make translations on the basis of the notified languages, and first translation circuit 33 and second translation circuit 34 determine the languages to be translated. The method described above may be used. Instead of greetings, other words in native languages may be used.

Moreover, the language of one speaker may be set in advance. For example, the language on the receptionist side such as second speaker 12 illustrated in FIG. 1 may be set in advance to speed up translation processing.

Constituent elements that may become unnecessary or unnecessary constituent elements described above may be omitted, or control circuit 37 may deactivate such constituent elements.

First voice synthesis circuit 35 and second voice synthesis circuit 36 may have a function of simulating a voice tone of each speaker. The voice tone as used herein refers to, for example, the pitch of the voice. This allows speakers to have conversations naturally.

Control circuit 37 may cause first echo canceller 40 and third echo canceller 60 to update the first transfer function and the third transfer function only during a period in which first voice synthesis circuit 35 is outputting the first translated voice. Moreover, control circuit 37 may cause second echo canceller 50 and fourth echo canceller 70 to update the second transfer function and the fourth transfer function only during a period in which second voice synthesis circuit 36 is outputting the second translated voice.

Although translation device 20 illustrated in FIG. 1 includes two display circuits, namely first display circuit 25 and second display circuit 26, these display circuits may be integrated into a single unit as illustrated in FIG. 11.

FIG. 11 is a diagram illustrating one example of the condition of use of translation device 20.

In the example of translation device 20 illustrated in FIG. 11, for example, constituent elements described in Embodiment 1 are integrated into a single unit. First display circuit 25 displayed on the side of second speaker 12 shows the words of first speaker in solid characters and shows the words of second speaker 12 in dotted characters, whereas second display circuit 26 displayed on the side of first speaker 11 shows the words of first speaker 11 in dotted characters and shows the words of second speaker 12 in solid characters. The configuration described above allows the words of first and second speakers 11 and 12 to be easily distinguished from each other and improves the visibility of translation device 20 for first and second speakers 11 and 12.

Although Embodiments 1 to 6 has described two-way conversations between first speaker 11 and second speaker 12, the number of speakers is not limited to two. First speaker 11 illustrated in FIG. 1 is described as a customer, but for example, the number of customers is not limited to one and may be two or more. Translated voices can be output sequentially when a plurality of persons speaks sequentially. It goes without saying that there is not particular limitations on the number of persons on the receptionist side illustrated in FIG. 1.

In the example illustrated in FIG. 11, translation device 20 includes the two loudspeakers, namely first loudspeaker 22, on the side of first speaker 11 and second loudspeaker 24 on the side of second speaker 12. Alternatively, the translation device may include only one loudspeaker, and may additionally include a summing circuit that sums the first translated voice output from first voice synthesis circuit 35 and the second translated output from second voice synthesis circuit 36 to output a sum translated voice so that the sum translated voice is output from the aforementioned one loudspeaker.

In this case, first echo 13 and fourth echo 16 become the same phenomenon. Thus, fourth echo canceller 70 is unnecessary, and only first echo canceller 40 is necessary. Similarly, second echo 14 and third echo 15 become the same phenomenon. Thus, third echo canceller 60 is unnecessary, and only second echo canceller 50 is necessary. The configuration described above can considerably reduce the scale and cost of hardware.

When a phenomenon in which a sum translated voice whose sound level has been amplified by one loudspeaker enters into second microphone 23 is defined as fifth echo, the fifth echo is the same phenomenon as first echo 13 and fourth echo 16. Thus, a fifth echo canceller with the same configuration and function as those of first echo canceller 40 becomes necessary. Moreover, when a phenomenon in which a sum translated voice whose sound level has been amplified by one loudspeaker enters into first microphone 21 is defined as sixth echo, the sixth echo is the same phenomenon as second echo 14 and third echo 15. Thus, a sixth echo canceller with the same configuration and function as those of second echo canceller 50 becomes necessary.

As described above, translation device 20 is a translation device for, in conversations between first speaker 11 and second speaker 12, translating the language of one speaker into the language of the other speaker and outputting a synthesized voice after amplifying the sound level of the synthesized voice, and includes first microphone 21 that receives input of the first voice of first speaker 11, the first voice recognition circuit that recognizes the first voice to output the first character string, the first translation circuit that translates the first character string output from the first voice recognition circuit into the language of second speaker 12 to output the third character string, the first voice synthesis circuit that converts the third character string output from the first translation circuit into the first translated voice, second microphone 23 that receives input of the second voice of second speaker 12, the second voice recognition circuit that recognizes the second voice to output the second character string, the second translation circuit that translates the second character string output from the second voice recognition circuit into the language of first speaker 11 to output the fourth character string, the second voice synthesis circuit that converts the fourth character string output from the second translation circuit into the second translated voice, the summing circuit that sums the first translated voice output from the first voice synthesis circuit and the second translated voice output from the second voice synthesis circuit to output the sum translated voice, the loudspeaker that amplifies the sound level of the sum translated voice output from the summing circuit, the fifth echo canceller that, when fifth echo refers to a phenomenon in which the sum translated voice whose sound level has been amplified by the loudspeaker enters into second microphone 23, estimates a fifth echo signal indicating the fifth echo from the sum translated voice and a fifth transfer function corresponding to the fifth echo and removes the fifth echo signal from the output signal of second microphone 23, the sixth echo canceller that, when sixth echo refers to a phenomenon in which the sum translated voice whose sound level has been amplified by the loudspeaker enters into first microphone 21, estimates a sixth echo signal indicating the sixth echo from the sum translated voice and a sixth transfer function corresponding to the sixth echo and removes the sixth echo signal from the output signal of first microphone 21, and the control circuit. The control circuit causes the fifth echo canceller to update the transfer function used to estimate the fifth echo signal during a period in which the first voice synthesis circuit is outputting the first translated voice or the second voice synthesis circuit is outputting the second translated voice, and causes the sixth echo canceller to update the transfer function used to emirate the sixth echo signal during a period in which the first voice synthesis circuit is outputting the first translated voice or the second voice synthesis circuit is outputting the second translated voice.

Translation device 20 as described above can assist conversations between two or more speakers while stably recognizing voices by removing acoustic noise including echo, even in the case where voices of a plurality of speakers and a plurality of synthesized voices are present simultaneously overlapping one another, the synthesized voices being output as a result of recognizing and translating the voice of each speaker into a language on the other end and synthesizing resultant voices. Moreover, since the above-described configuration can be achieved with a small number of constituent elements, it is possible to considerably reduce the scale and cost of hardware.

Translation device 20 may further include, for example, the first crosstalk canceller that, when first crosstalk refers to a phenomenon in which the first voice enters into second microphone 23, estimates the first crosstalk signal indicating the first crosstalk from the first voice and removes the first crosstalk signal from the output signal of second microphone 23, and the second crosstalk canceller that, when second crosstalk refers to a phenomenon in which the second voice enters into first microphone 21, estimates the second crosstalk signal indicating the second crosstalk from the second voice and removes the second crosstalk signal from the output signal of first microphone 21.

Translation device 20 as described above can assist conversations between two speakers while stably recognizing voices by removing acoustic noise including echo and crosstalk, even in the case where voices of a plurality of speakers and a plurality of synthesized voices are present simultaneously overlapping one another, the synthesized voices being output as a result of recognizing and translating the voice of each speaker into a language on the other end and synthesizing resultant voices.

The translation method as described above may be performed by, for example, a processor executing programs. That is, first echo canceller 40, second echo canceller 50, third echo canceller 60, fourth echo canceller 70, first crosstalk canceller 80, and second crosstalk canceller 90 according to the embodiments described above may be implemented by a processor executing programs. The processor includes, in addition to the CPU described above, a digital signal processor (DSP), a micro-processing unit (MP), and a microprocessor.

The translation method as described above may also be implemented by programs recorded on a computer-readable recording medium such as a ROM or a CD-ROM as described above and the recording medium recording such programs. The translation method described above may also be executed by computer equipment executing the programs described above.

The embodiments described above are merely illustrative examples of the technique according to the present disclosure, and therefore, various modifications, replacement, addition, and omission are possible within the scope of claims or within an equivalent range of the claims.

[Industrial Applicability]

The present disclosure is applicable to a translation device for assisting conversations between two or more speakers while stably recognizing voices by removing acoustic noise including echo, even in the case where voices of a plurality of speakers and a plurality of synthesized voices are present simultaneously overlapping one another, the synthesized voices being output as a result of recognizing and translating the voice of each speaker into a language on the other end and synthesizing resultant voices. Specifically, the present disclosure is applicable as a translation device for use in a narrow space range.

[Reference Signs List]

| | |
|---|---|
| 10 | counter |
| 11 | first speaker |
| 12 | second speaker |
| 13, 13a | first echo |
| 14, 14a | second echo |
| 15 | third echo |
| 15a | first howling |
| 16 | fourth echo |
| 16a | second howling |
| 17, 17a | first crosstalk |
| 18, 18a | second crosstalk |
| 20, 20a, 20b, 20c, 20d, 20e | translation device |
| 21 | first microphone |
| 22 | first loudspeaker |
| 23 | second microphone |
| 24 | second loudspeaker |
| 25 | first display circuit |
| 26 | second display circuit |
| 27 | first language selection circuit |
| 28 | second language selection circuit |

| 31 | first voice recognition circuit |
|---|---|
| 32 | second voice recognition circuit |
| 33 | first translation circuit |
| 34 | second translation circuit |
| 35 | first voice synthesis circuit |
| 36 | second voice synthesis circuit |
| 37 | control circuit |
| 38 | image-signal generation circuit |
| 40 | first echo canceller |
| 41 | first subtractor |
| 42 | first memory circuit |
| 43 | first convolution arithmetic unit |
| 44 | first transfer-function memory circuit |
| 45 | first transfer-function updating circuit |
| 50 | second echo canceller |
| 51 | second subtractor |
| 52 | second memory circuit |
| 53 | second convolution arithmetic unit |
| 54 | second transfer-function memory circuit |
| 55 | second transfer-function updating circuit |
| 60 | third echo canceller |
| 60a | first howling canceller |
| 61 | third subtractor |
| 62 | third memory circuit |
| 63 | third convolution arithmetic unit |
| 64 | third transfer-function memory circuit |
| 65 | third transfer-function updating circuit |
| 66 | first delay unit |
| 70 | fourth echo canceller |
| 70a | second howling canceller |
| 71 | fourth subtractor |
| 72 | fourth memory circuit |
| 73 | fourth convolution arithmetic unit |
| 74 | fourth transfer-function memory circuit |
| 75 | fourth transfer-function updating circuit |
| 76 | second delay unit |
| 80 | first crosstalk canceller |
| 80a | first echo/first crosstalk canceller |
| 81 | fifth subtractor |
| 82 | fifth memory circuit |
| 83 | fifth convolution arithmetic unit |
| 84 | fifth transfer-function memory circuit |
| 85 | fifth transfer-function updating circuit |
| 90 | second crosstalk canceller |
| 90a | second echo/second crosstalk canceller |
| 91 | sixth subtractor |
| 92 | sixth memory circuit |
| 93 | sixth convolution arithmetic unit |
| 94 | sixth transfer-function memory circuit |
| 95 | sixth transfer-function updating circuit |
| 201 | processor |
| 291 | first camera |
| 292 | second camera |
| 311 | first language identification circuit |
| 321 | second language identification circuit |

**Claims**

1. A translation device which, in a conversation between a first speaker and a second speaker, translates a language of one speaker into a language of the other speaker and outputs a synthesized voice after amplifying a sound level of the synthesized voice, the translation device comprising:

a first microphone that receives input of a first voice of the first speaker;
a first voice recognition circuit that recognizes the first voice to output a first character string;
a first translation circuit that translates the first character string output from the first voice recognition circuit into a language of the second speaker to output a third character string;
a first voice synthesis circuit that converts the third character string output from the first translation circuit into a first translated voice;
a first loudspeaker that amplifies a sound level of the first translated voice;
a second microphone that receives input of a second voice of the second speaker;
a second voice recognition circuit that recognizes the second voice to output a second character string;
a second translation circuit that translates the second character string output from the second voice recognition circuit into a language of the first speaker to output a fourth character string;
a second voice synthesis circuit that converts the fourth character string output from the second translation circuit into a second translated voice;
a second loudspeaker that amplifies a sound level of the second translated voice;
a first echo canceller that, when first echo refers to a phenomenon in which the first translated voice whose sound level has been amplified by the first loudspeaker enters into the second microphone, estimates a first echo signal indicating the first echo from the first translated voice and a first transfer function corresponding to the first echo, and removes the first echo signal from an output signal of the second microphone;
a second echo canceller that, when second echo refers to a phenomenon in which the second translated voice whose sound level has been amplified by the second loudspeaker enters into the first microphone, estimates a second echo signal indicating the second echo from the second translated voice and a second transfer function corresponding to the second echo, and removes the second echo signal from an output signal of the first microphone; and
a control circuit,

wherein the control circuit causes:

the first echo canceller to update the first transfer function used to estimate the first echo signal during a period in which the first voice synthesis circuit is outputting the first translated voice; and
the second echo canceller to update the second transfer function used to estimate the second echo signal during a period in which the second voice synthesis circuit is outputting the second translated voice.

2. The translation device according to claim 1, further comprising:

a third echo canceller that, when third echo refers to a phenomenon in which the first translated voice whose sound level has been amplified by the first loudspeaker enters into the first microphone, estimates a third echo signal indicating the third echo from the first translated voice and a third transfer function corresponding to the third echo, and removes the third echo signal from the output signal of the first microphone; and
a fourth echo canceller that, when fourth echo refers to a phenomenon in which the second translated voice whose sound level has been amplified by the second loudspeaker enters into the second microphone, estimates a fourth echo signal indicating the fourth echo from the second translated voice and a fourth transfer function corresponding to the fourth echo, and removes the fourth echo signal from the output signal of the second microphone,

wherein the control circuit causes:

the third echo canceller to update the third transfer function used to estimate the third echo signal during a period in which the first voice synthesis circuit is outputting the first translated voice; and
the fourth echo canceller to update the fourth transfer function used to estimate the fourth echo signal during a period in which the second voice synthesis circuit is outputting the second translated voice.

3. A translation device which, in a conversation between a first speaker and a second speaker, translates a language of one speaker into a language of the other speaker and outputs a synthesized voice after amplifying a sound level of the synthesized voice, the translation device comprising:

a first microphone that receives input of a first voice of the first speaker;
a first voice recognition circuit that recognizes the first voice to output a first character string;
a first translation circuit that translates the first character string output from the first voice recognition circuit into a language of the second speaker to output a third character string;
a first voice synthesis circuit that converts the third character string output from the first translation circuit into a first translated voice;
a first loudspeaker that amplifies a sound level of the first translated voice;
a second microphone that receives input of a second voice of the second speaker;
a second voice recognition circuit that recognizes the second voice to output a second character string;
a second translation circuit that translates the second character string output from the second voice recognition circuit into a language of the first speaker to output a fourth character string;
a second voice synthesis circuit that converts the fourth character string output from the second translation circuit into a second translated voice;
a second loudspeaker that amplifies a sound level of the second translated voice;
a third echo canceller that, when third echo refers to a phenomenon in which the first translated voice whose sound level has been amplified by the first loudspeaker enters into the first microphone, estimates a third echo signal indicating the third echo from the first translated voice and a third transfer function corresponding to the third echo, and removes the third echo signal from an output signal of the first microphone;
a fourth echo canceller that, when fourth echo refers to a phenomenon in which the second translated voice whose sound level has been amplified by the second loudspeaker enters into the second microphone, estimates a fourth echo signal indicating the fourth echo from the second translated voice and a fourth transfer function corresponding to the fourth echo, and removes the fourth echo signal from an output signal of the second microphone; and
a control circuit,

wherein the control circuit causes:

the third echo canceller to update the third transfer function used to estimate the third echo signal during a period in which the first voice synthesis circuit is outputting the first translated voice; and
the fourth echo canceller to update the fourth transfer function used to estimate the fourth echo signal during a period in which the second voice synthesis circuit is outputting the second translated voice.

4. The translation device according to any one of claims 1 to 3, further comprising:

a first crosstalk canceller that, when first crosstalk refers to a phenomenon in which the first voice enters into the second microphone, estimates a first crosstalk signal indicating the first crosstalk from the first voice and removes the first crosstalk signal from the output signal of the second microphone; and
a second crosstalk canceller that, when second crosstalk refers to a phenomenon in which the second voice enters into the first microphone, estimates a second crosstalk signal indicating the second crosstalk from the second voice and removes the second crosstalk signal from the output signal of the first microphone.

5. The translation device according to claim 1 or 2, further comprising:

a first language selection circuit that receives a selection of a first language used by the first speaker from the first speaker and notifies the control circuit of the selection; and
a second language selection circuit that receives a selection of a second language used by the second speaker from the second speaker and notifies the control circuit of the selection,

wherein the control circuit causes:

in accordance with the first language notified from the first language selection circuit and the second language notified from the second language selection circuit,
the first voice recognition circuit to recognize a voice in the first language;
the second voice recognition circuit to recognize a voice in the second language;
the first translation circuit to translate the first language into the second language;

42

the second translation circuit to translate the second language into the first language;
the first voice synthesis circuit to synthesize a voice in the second language; and
the second voice synthesis circuit to synthesize a voice in the first language.

6. The translation device according to any one of claims 1, 2, and 5, further comprising:

a first language identification circuit that identifies a first language by the first voice and notifies the control circuit of a result of the identification; and
a second language identification circuit that identifies a second language by the second voice and notifies the control circuit of a result of the identification,

wherein the control circuit causes:

in accordance with the first language identified by the first language identification circuit and the second language identified by the second language identification circuit,
the first voice recognition circuit to recognize a voice in the first language;
the second voice recognition circuit to recognize a voice in the second language;
the first translation circuit to translate the first language into the second language;
the second translation circuit to translate the second language into the first language;
the first voice synthesis circuit to synthesize a voice in the second language; and
the second voice synthesis circuit to synthesize a voice in the first language.

7. The translation device according to claim 5,

wherein when the first language received by the first language selection circuit and the second language received by the second language selection circuit are same,
the control circuit deactivates the first echo canceller, the second echo canceller, the first translation circuit, the second translation circuit, the first voice synthesis circuit, and the second voice synthesis circuit.

8. The translation device according to claim 6,

wherein when the first language identified by the first language identification circuit and the second language identified by the second language identification circuit are same,
the control circuit deactivates the first echo canceller, the second echo canceller, the first translation circuit, the second translation circuit, the first voice synthesis circuit, and the second voice synthesis circuit.

9. The translation device according to any one of claims 1 to 8, further comprising:

a first voice sex-determination circuit that determines a sex of the first speaker from a first voice; and
a second voice sex-determination circuit that determines a sex of the second speaker from a second voice,

wherein the control circuit causes:

the first voice synthesis circuit to output a synthesized voice of the same sex as a result of the determination by the first voice sex-determination circuit; and
the second voice synthesis circuit to output a synthesized voice of the same sex as a result of the determination by the second voice sex-determination circuit.

10. The translation device according to any one of claims 1 to 9, further comprising:

a first camera that captures an image of a face of the first speaker;
a first face recognition circuit that specifies the first speaker in accordance with a first image signal output from the first camera;
a second camera that captures an image of a face of the second speaker;
a second face recognition circuit that specifies the second speaker in accordance with a second image signal output from the second camera; and
a database that stores a speaker and a language of the speaker in a pair,

wherein the control circuit:

notifies the first voice recognition circuit, the first translation circuit, the second translation circuit, and the first voice synthesis circuit of a first language of the first speaker when a language of the first speaker identified by the first face recognition circuit is stored in the database; and
notifies the second voice recognition circuit, the first translation circuit, the second translation circuit, and the second voice synthesis circuit of a second language of the second speaker when a language of the second speaker identified by the second face recognition circuit is stored in the database.

11. The translation device according to claim 10, further comprising:

a first image sex-determination circuit that determines a sex of the first speaker from the first image signal output from the first camera; and
a second image sex-determination circuit that determines a sex of the second speaker from the second image signal output from the second camera,

wherein the control circuit causes:

the first voice synthesis circuit to output a synthesized voice of the same sex as a result of the determination by the first image sex-determination circuit; and
the second voice synthesis circuit to output a synthesized voice of the same sex as a result of the determination by the second image sex-determination circuit.

12. A translation device which, in a conversation between a first speaker and a second speaker, translates a language of one speaker into a language of the other speaker and outputs a synthesized voice after amplifying a sound level of the synthesized voice, the translation device comprising:

a first microphone that receives input of a first voice of the first speaker;
a first voice recognition circuit that recognizes the first voice to output a first character string;
a first translation circuit that translates the first character string output from the first voice recognition circuit into a language of the second speaker to output a third character string;
a first voice synthesis circuit that converts the third character string output from the first translation circuit into a first translated voice;
a second microphone that receives input of a second voice of the second speaker;
a second voice recognition circuit that recognizes the second voice to output a second character string;
a second translation circuit that translates the second character string output from the second voice recognition circuit into a language of the first speaker to output a fourth character string;
a second voice synthesis circuit that converts the fourth character string output from the second translation circuit into a second translated voice;
a summing circuit that sums the first translated voice output from the first voice synthesis circuit and the second translated voice output from the second voice synthesis circuit to output a sum translated voice;
a loudspeaker that amplifies a sound level of the sum translated voice output from the summing circuit;
a fifth echo canceller that, when fifth echo refers to a phenomenon in which the sum translated voice whose sound level has been amplified by the loudspeaker enters into the second microphone, emirates a fifth echo signal indicating the fifth echo from the sum translated voice and a fifth transfer function corresponding to the fifth echo, and removes the fifth echo signal from an output signal of the second microphone;
a sixth echo canceller that, when sixth echo refers to a phenomenon in which the sum translated voice whose sound level has been amplified by the loudspeaker enters into the first microphone, estimates a sixth echo signal indicating the sixth echo from the sum translated voice and a sixth transfer function corresponding to the sixth echo, and removes the sixth echo signal from an output signal of the first microphone; and
a control circuit,

wherein the control circuit causes:

the fifth echo canceller to update the fifth transfer function used to emirate the fifth echo signal during a period in which the first voice synthesis circuit is outputting the first translated voice or the second voice synthesis circuit is outputting the second translated voice; and
the sixth echo canceller to update the sixth transfer function used to estimate the sixth echo signal during a period in which the first voice synthesis circuit is outputting the first translated voice or the second voice synthesis circuit is outputting the second translated voice.

13. The translation device according to claim 12, further comprising:

a first crosstalk canceller that, when first crosstalk refers to a phenomenon in which the first voice enters into the second microphone, estimates a first crosstalk signal indicating the first crosstalk from the first voice and removes the first crosstalk signal from the output signal of the second microphone; and
a second crosstalk canceller that, when second crosstalk refers to a phenomenon in which the second voice enters into the first microphone, estimates a second crosstalk signal indicating the second crosstalk from the second voice and removes the second crosstalk signal from the output signal of the first microphone.

14. A translation method for, in a conversation between a first speaker and a second speaker, translating a language of one speaker into a language of the other speaker and outputting a synthesized voice after amplifying a sound level of the synthesized voice, the translation method comprising:

receiving input of a first voice of the first speaker;
recognizing the first voice to output a first character string;
translating the first character string output in the recognizing of the first voice into a language of the second speaker to output a third character string;
converting the third character string output in the translating of the first character string into a first translated voice;
amplifying a sound level of the first translated voice;
receiving input of a second voice of the second speaker;
recognizing the second voice to output a second character string;
translating the second character string output in the recognizing of the second voice into a language of the first speaker to output a fourth character string;
converting the fourth character string output in the translating of the second character string into a second translated voice;
amplifying a sound level of the second translated voice;
when first echo refers to a phenomenon in which the first translated voice whose sound level has been amplified in the amplifying of the sound level of the first translated voice is received in the receiving of input of the second voice, estimating a first echo signal indicating the first echo from the first translated voice and a first transfer function corresponding to the first echo, and removing the first echo signal from an output signal output in the receiving of input of the second voice;
when second echo refers to a phenomenon in which the second translated voice whose sound level has been amplified in the amplifying of the sound level of the second translated voice is received in the receiving of input of the first voice, estimating a second echo signal indicating the second echo from the second translated voice and a second transfer function corresponding to the second echo, and removing the second echo signal from an output signal output in the receiving of input of the first voice; and
giving an instruction to update the first transfer function used to estimate the first echo signal in the estimating of the first echo signal during a period in which the first translated voice is being output in the converting of the third character string, and to update the second transfer function used to estimate the second echo signal in the estimating of the second echo signal during a period in which the second translated voice is being output in the converting of the fourth character string.

15. A translation method for, in a conversation between a first speaker and a second speaker, translating a language of one speaker into a language of the other speaker and outputting a synthesized voice after amplifying a sound level of the synthesized voice, the translation method comprising:

receiving input of a first voice of the first speaker;
recognizing the first voice to output a first character string;
translating the first character string output in the recognizing of the first voice into a language of the second speaker to output a third character string;
converting the third character string output in the translating of the first character string into a first translated voice;
amplifying a sound level of the first translated voice;
receiving input of a second voice of the second speaker;
recognizing the second voice to output a second character string;
translating the second character string output in the recognizing of the second voice into a language of the first speaker to output a fourth character string;

converting the fourth character string output in the translating of the second character string into a second translated voice;

amplifying a sound level of the second translated voice;

when third echo refers to a phenomenon in which the first translated voice whose sound level has been amplified in the amplifying of the sound level of the first translated voice is received in the receiving of input of the first voice, estimating a third echo signal indicating the third echo from the first translated voice and a third transfer function corresponding to the third echo, and removing the third echo signal from an output signal output in the receiving of input of the first voice;

when fourth echo refers to a phenomenon in which the second translated voice whose sound level has been amplified in the amplifying of the sound level of the second translated voice is received in the receiving of input of the second voice, estimating a fourth echo signal indicating the fourth echo from the second translated voice and a fourth transfer function corresponding to the fourth echo, and removing the fourth echo signal from an output signal output in the receiving of input of the second voice; and

giving an instruction to update the third transfer function used to estimate the third echo signal in the estimating of the third echo signal during a period in which the first translated voice is being output in the converting of the third character string, and to update the fourth transfer function used to estimate the fourth echo signal in the estimating of the fourth echo signal during a period in which the second translated voice is being output in the converting of the fourth character string.

FIG. 1

## FIG. 2

EP 3 890 288 A1

# FIG. 3

Start

S100

First
voice synthesis circuit 35 is
outputting first translated
voice?

NO

YES

Update transfer function — S101

End

# FIG. 4

Start

S200

Second
voice synthesis circuit 36 is
outputting second translated
voice?

NO

YES

Update transfer function — S201

End

## FIG. 5

EP 3 890 288 A1

FIG. 6

EP 3 890 288 A1

# FIG. 7

```
                    ┌─────────┐
                    │  Start  │
                    └────┬────┘
                         │
              ┌──────────▼──────────┐
              │ Select first language│ ──── S300
              └──────────┬──────────┘
                         │
              ┌──────────▼──────────┐
              │Select second language│ ──── S301
              └──────────┬──────────┘
                         │         S302
                    ┌────▼────┐
                    │First language =│          S304
                    │Second language?│  YES  ┌───────────────────┐
                    └────┬────┘────────────► │Sound-level amplification│
                      NO │                   │    is necessary?     │  NO
                         │                   └─────┬─────────┘──────────────┐
                         │                      YES│                        │
              S303       │              S305       │                        │    S306
  ┌──────────────────────▼─┐  ┌──────────────────▼───┐  ┌──────────────────▼───┐
  │    First embodiment     │  │  Second embodiment    │  │   Third embodiment    │
  │                         │  │                       │  │                       │
  │•First echo canceller    │  │•First howling canceller│  │•First crosstalk canceller│
  │•Second echo canceller   │  │•Second howling canceller│ │•Second crosstalk canceller│
  │•Third echo canceller    │  │•First echo/first crosstalk│ │These cancellers are   │
  │•Fourth echo canceller   │  │ canceller             │  │brought into operation. │
  │•First crosstalk canceller│ │•Second echo/second crosstalk│└──────────┬──────────┘
  │•Second crosstalk canceller││ canceller             │             │
  │These cancellers are     │  │These cancellers are brought│         │
  │brought into operation.  │  │into operation.        │             │
  └──────────┬──────────────┘  └──────────┬───────────┘             │
             │                            │                          │
             │◄───────────────────────────┴──────────────────────────┘
             │
        ┌────▼────┐
        │   End   │
        └─────────┘
```

# FIG. 8

FIG. 9

EP 3 890 288 A1

FIG. 10

EP 3 890 288 A1

FIG. 11

EP 3 890 288 A1

## INTERNATIONAL SEARCH REPORT

| | International application No. |
|---|---|
| | PCT/JP2019/045118 |

A.   CLASSIFICATION OF SUBJECT MATTER
Int.Cl. H04M1/58(2006.01)i, H04R3/02(2006.01)i, G10L13/00(2006.01)i,
G06F3/16(2006.01)i, G10L15/00(2013.01)i
FI: G10L15/00200C, G10L13/00100G, G06F3/16690, H04M1/58Z, H04R3/02
According to International Patent Classification (IPC) or to both national classification and IPC

B.   FIELDS SEARCHED

Minimum documentation searched (classification system followed by classification symbols)
Int.Cl. H04M1/58, H04R3/02, G10L13/00, G06F3/16, G10L15/00

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | JP 2012-93641 A (TOSHIBA CORPORATION) 17 May 2012, entire text, all drawings | 1-15 |
| A | JP 6311136 B2 (PANASONIC INTELLECTUAL PROPERTY MANAGEMENT CO., LTD.) 18 April 2018, entire text, all drawings | 1-15 |
| A | JP 2018-173652 A (PANASONIC INTELLECTUAL PROPERTY MANAGEMENT CO., LTD.) 08 November 2018, entire text, all drawings | 1-15 |

☐   Further documents are listed in the continuation of Box C.       ☒   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14.01.2020 | 28.01.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

International application No.

PCT/JP2019/045118

| JP 2012-93641 A | 17 May 2012 | US 2012/0109632 A1 entire text, all drawings |
| JP 6311136 B2 | 18 April 2018 | US 2018/0115650 A1 entire text, all drawings WO 2017/064839 A1 EP 3312839 A1 |
| JP 2018-173652 A | 08 November 2018 | US 2018/0322875 A1 entire text, all drawings WO 2018/008227 A1 |

Form PCT/ISA/210 (patent family annex) (January 2015)

**EP 3 890 288 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6311136 B